(19) Europäisches Patentamt / European Patent Office / Office européen des brevets

(11) EP 4 321 583 B1

(12) **EUROPEAN PATENT SPECIFICATION**

(45) Date of publication and mention of the grant of the patent:
**09.04.2025 Bulletin 2025/15**

(21) Application number: **23188847.0**

(22) Date of filing: **01.08.2023**

(51) International Patent Classification (IPC):
***C09D 11/322*** *(2014.01)*

(52) Cooperative Patent Classification (CPC):
**C09D 11/322**

(54) **AQUEOUS INK, INK CARTRIDGE AND INK JET RECORDING METHOD**

WÄSSRIGE TINTE, TINTENPATRONE UND TINTENSTRAHLAUFZEICHNUNGSVERFAHREN

ENCRE AQUEUSE, CARTOUCHE D'ENCRE ET PROCÉDÉ D'ENREGISTREMENT PAR JET D'ENCRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2022 JP 2022126674**
**05.07.2023 JP 2023110708**

(43) Date of publication of application:
**14.02.2024 Bulletin 2024/07**

(73) Proprietor: **CANON KABUSHIKI KAISHA**
**Tokyo 146-8501 (JP)**

(72) Inventors:
- **ISHII, Tomoaki**
  **Tokyo (JP)**
- **IKEGAMI, Masayuki**
  **Tokyo (JP)**
- **SHIIBA, Kenichi**
  **Tokyo (JP)**
- **KUSADA, Mutsuki**
  **Tokyo (JP)**

(74) Representative: **WESER & Kollegen Patentanwälte PartmbB**
**Radeckestraße 43**
**81245 München (DE)**

(56) References cited:
**JP-A- 2005 103 457** **US-A1- 2016 222 239**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### BACKGROUND OF THE INVENTION

#### Field of the Invention

The present invention relates to an aqueous ink, an ink cartridge and an ink jet recording method.

#### Description of the Related Art

In recent years, an ink jet recording method has enabled the recording of such a high-definition image as achieved by silver halide photography or offset printing. In addition, along with the diversification of applications, such as photographic printing and graphic art printing, an improvement in image quality in a recording medium including a coating layer such as glossy paper has been required. A system (thermal ink jet system) including ejecting an ink from a recording head of an ink jet system through the action of thermal energy is suitable for the improvement in image quality because the system enables high-density recording.

In recent years, the ink jet recording method has been required to record an image having definition higher than ever before. An investigation has been made for improving image quality in a recording medium including a coating layer such as glossy paper. For example, there is a proposal of an ink that can record an image, which is improved in glossiness, through the following (Japanese Patent Application Laid-Open No. 2004-115649): a low-molecular weight surfactant is used to reduce the surface tension of the ink, to effectively improve the permeability of the ink into a recording medium. In addition, there is a proposal of an ink that can record an image, which is improved in glossiness, through the following (Japanese Patent Application Laid-Open No. 2006-233083): a silicone (polyorganosiloxane)-based surfactant is used to improve the wettability of the ink into a recording medium. In addition, there is a proposal concerning a dye ink improved in wettability into a recording medium and defoaming property by using an acetylene glycol-based surfactant (Japanese Patent Application Laid-Open No. 2005-103457).

The inventors of the present invention have investigated a recording method by which image quality in a recording medium including a coating layer such as glossy paper can be improved through use of the thermal ink jet system. The inventors have used, as an ink, a low-surface tension ink using a silicone-based surfactant with reference to the description of Japanese Patent Application Laid-Open No. 2006-233083 described above. As a result, the inventors have revealed that the image quality can be improved by the silicone-based surfactant, but have found that the following problems occur.

First, the following phenomenon is observed: when the ink is stored over a long time period, the surface tension of the ink increases with time owing to the decomposition of the silicone-based surfactant. In the case where the ink which has increased in surface tension by the long-term storage is used in recording, a significant reduction in image quality is observed as compared to that in the case where recording is performed with the ink before the storage. In addition, when the silicone-based surfactant is used, the storage stability of the ink may be improved but the following phenomenon is observed: during the recording of an image, a fine liquid droplet (hereinafter referred to as "mist") occurs to adhere to a recording head or the inside of a recording apparatus. The mist is an extremely fine liquid droplet as compared to a main ink droplet for recording the image. When the recording is continued under a state in which the mist occurs, the mist may adhere to various sensors in the recording apparatus to reduce the sensitivity of each of the sensors or to cause the malfunction thereof. In addition, the adhesion of the mist to the recording medium also causes an influence on the image. That is, when an attempt is made to obtain satisfactory image quality through use of the thermal ink jet system, the suppression of the occurrence of the mist and an improvement in storage stability of the ink become problems. Accordingly, a further investigation is required to solve those problems.

### SUMMARY OF THE INVENTION

Accordingly, an object of the present invention is to provide an aqueous ink that is suppressed from causing mist and is excellent in storage stability. Another object of the present invention is to provide an ink cartridge and an ink jet recording method each using the aqueous ink.

The above-mentioned objects are achieved by the present invention described below. That is, according to the present invention, there is provided an aqueous ink to be ejected from a recording head of an ink jet system through an action of thermal energy, the aqueous ink including: a particulate component; a first surfactant; and a second surfactant, wherein the particulate component contains at least one kind selected from the group consisting of: a pigment and a resin particle, wherein the first surfactant contains a compound represented by the following general formula (1), and wherein the second surfactant contains an acetylene glycol compound:

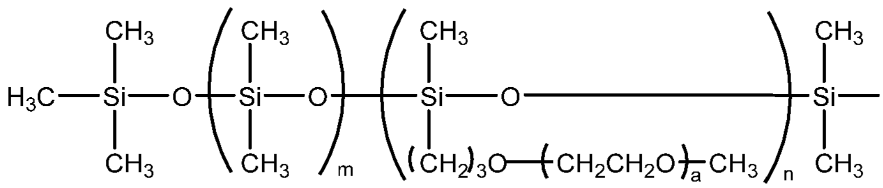

(1)

in the general formula (1), "m" and "n" each independently represent an integer of 1 or more and satisfy a relationship of m+n≤10, and "a" represents an integer of 10 or more to 20 or less.

Further features of the present invention will become apparent from the following description of exemplary embodiments with reference to the attached drawings.

BRIEF DESCRIPTION OF THE DRAWINGS

FIG. 1 is a sectional view for schematically illustrating an ink cartridge according to one embodiment of the present invention.

FIG. 2A and FIG. 2B are views for schematically illustrating an example of an ink jet recording apparatus to be used in an ink jet recording method of the present invention, in which FIG. 2A is a perspective view of the main portion of the ink jet recording apparatus and FIG. 2B is a perspective view of a head cartridge.

DESCRIPTION OF THE EMBODIMENTS

The present invention is described in more detail below by way of exemplary embodiments. In the present invention, when the ink contains a salt, the salt is present in a state of dissociating into ions in an ink, but the expression "contains the salt" is used for convenience. In addition, an aqueous ink for ink jet is sometimes simply described as "ink". Physical property values are values at normal temperature (25°C) unless otherwise stated.

To improve image quality in a recording medium including a coating layer such as glossy paper, the inventors of the present invention have investigated a low-surface tension ink using a silicone-based surfactant as a surfactant to be incorporated into an aqueous ink. As a result, the inventors have observed the following phenomenon: when the ink is stored for a long time period, the surface tension of the ink increases with time. The phenomenon results from the decomposition of the silicone-based surfactant in the ink. In the case where the ink which has increased in surface tension by the long-term storage is used in recording, a significant reduction in image quality is observed as compared to that in the case where recording is performed with the ink before the storage.

A possible cause for the decomposition of the silicone-based surfactant in the aqueous ink is the fact that a siloxane moiety serving as the hydrophobic moiety of the silicone-based surfactant is easily hydrolyzed. In addition, a possible cause for the increase in surface tension of the ink by the decomposition of the silicone-based surfactant is the fact that the hydrolysis of the silicone-based surfactant divides the hydrophobic moiety and hydrophilic moiety of the surfactant from each other to result in the loss of the surface activity thereof.

In an aqueous ink for ink jet, the following silicone-based surfactant is generally used: the surfactant has a siloxane structure as a basic skeleton and the structure is modified with a polyether chain. The surfactants of this type are roughly classified into a one-terminal-modified type, a both-terminal-modified type, an ABn type, a side-chain-modified type and a side-chain-both-terminal-modified type in accordance with the type of the modification of the siloxane structure (-Si-O-) with the polyether chain. The inventors of the present invention have made various investigations on the structure of the following silicone-based surfactant: even when the silicone-based surfactant is used, an increase in surface tension of the ink due to the long-term storage thereof can be suppressed. As a result, the inventors have found that out of the silicone-based surfactants, the both-terminal-modified type surfactant, the ABn type surfactant (linear block copolymer) and a surfactant obtained by alkylating the ethylene oxide chain terminal of a side chain of the side-chain-modified type surfactant can each improve the storage stability of the ink.

A possible reason why the both-terminal-modified type and ABn type silicone-based surfactants can suppress the increase in surface tension is the fact that even when the siloxane skeleton of each of the surfactants is divided by hydrolysis, the surface activity thereof is hardly lost because a hydrophobic moiety and a hydrophilic moiety are present in a divided molecule thereof. In addition, a possible reason why the silicone-based surfactant obtained by alkylating the ethylene oxide chain terminal of the side chain of the side-chain-modified type surfactant can suppress the increase in surface tension of the ink is as described below. A hydroxide ion in the ink is given as one cause for the hydrolysis reaction of the siloxane skeleton of the silicone-based surfactant. A carboxylic acid ion produced by the oxidation of a hydroxy group in the ethylene oxide chain terminal of the silicone-based surfactant is also given as one cause therefor. The carboxylic

acid ion may perform a nucleophilic attack on an intramolecular or intermolecular siloxane skeleton to advance the hydrolysis. Accordingly, it is assumed that the increase in surface tension is suppressed because the alkylation of the ethylene oxide chain terminal suppresses the hydrolysis of the siloxane skeleton.

The inventors of the present invention have investigated the ejection characteristic of the ink, which is improved in storage stability by the selection of its silicone-based surfactant, by a thermal ink jet system. As a result, the inventors have found that a large amount of mist occurs peculiarly when each of the above-mentioned silicone-based surfactants that can each improve the storage stability of the ink is used. The phenomenon in which a large amount of mist occurs is a phenomenon that does not occur when a silicone-based surfactant having a low improving effect on the storage stability of the ink is used or in an ejection system except the thermal ink jet system.

Herein, mist in ink jet systems is described. The ink jet systems are roughly classified into a piezo ink jet system and the thermal ink jet system. The piezo ink jet system is a system including ejecting an ink from an ejection orifice of a recording head with a piezo element. The thermal ink jet system is a system including applying thermal energy to the ink to eject the ink from the ejection orifice of the recording head. In each of the piezo ink jet system and the thermal ink jet system, energy is applied to the liquid near the ejection orifice of the recording head and hence the ink is ejected under a liquid droplet state from the ejection orifice.

It is preferred that one liquid droplet be ejected when ejection energy is applied to the ink once. However, the liquid droplet may be divided into a plurality of droplets by various factors, such as the physical properties of the ink, the shape of the ejection orifice and the amount of the ejection energy. Of the divided liquid droplets, the liquid droplet (main droplet) having the largest volume adheres to the intended position of a recording medium. Meanwhile, the liquid droplet having a small volume may adhere to an unintended position of the recording medium to reduce the image quality of an image on the medium or may float in a recording apparatus without adhering to the recording medium and then adhere to the inside of the apparatus to be responsible for contamination or an apparatus failure. The divided liquid droplet that does not adhere to the intended position of the recording medium is referred to as "mist". It has been known that the ink division phenomenon tends not to occur when the surface tension of the ink out of the physical properties of the ink is high and the phenomenon tends to occur when the surface tension of the ink is low. The term "surface tension" as used herein refers to a surface tension (dynamic surface tension) in a time scale in which an ink liquid droplet is ejected from the ejection orifice of the recording head. The amount of the mist has a relationship with the ease with which a state in which the liquid droplet seems to leave a trail at the time of its ejection is established. It has been known that the amount tends to be large when the viscosity of the ink is high and the amount tends to be small when the viscosity of the ink is low.

For example, an acetylene glycol-based surfactant is quickly oriented to a gas-liquid interface. When the acetylene glycol-based surfactant is used in the ink, the surfactant may be quickly oriented to the surface of a liquid droplet formed by the ejection of the ink to reduce the surface tension of the liquid droplet, to thereby facilitate the occurrence of the division of the liquid droplet. In contrast, it was assumed that the orientation of a silicone-based surfactant to the gas-liquid interface was not so fast as to reduce the surface tension of the liquid droplet formed by the ejection, and hence the division of the liquid droplet hardly occurred. A surfactant reduces the tension of the gas-liquid interface as follows: a molecule of the surfactant desorbs from a micelle formed by the surfactant in the liquid and is oriented to the gas-liquid interface to reduce the tension. The rate of the orientation depends on the strength of the association of the micelle. Thus, it was assumed that a strong association force acted between the molecules of the silicone-based surfactant to suppress the desorption of the molecule of the surfactant from the formed micelle, to thereby slow the orientation to the gas-liquid interface, and hence the division of the liquid droplet hardly occurred. However, contrary to the assumption, the inventors of the present invention have found that a phenomenon in which the amount of mist increases occurs peculiarly when an ink using a silicone-based surfactant that can improve the storage stability of the ink is ejected by the thermal ink jet system. The inventors of the present invention have assumed a cause for the occurrence of a large amount of mist to be as described below.

First, a cause for an increase in amount of mist when the both-terminal-modified type or ABn type silicone-based surfactant is used is assumed to be as described below. The viscosity of an ink including the both-terminal-modified type or ABn type silicone-based surfactant may be liable to be increased by the evaporation of the ink at an ejection orifice of a recording head because of the molecular structure of the surfactant. Accordingly, a state in which a liquid droplet of the ink seems to leave a trail at the time of its ejection is established and then the liquid droplet is divided into a spherical shape. Probably because of the foregoing, the mist is liable to occur.

Next, a cause for an increase in amount of mist when the silicone-based surfactant obtained by alkylating the ethylene oxide chain terminal of the side chain of the side-chain-modified type surfactant is used is assumed to be as described below. The alkylation of the ethylene oxide chain terminal is expected to reduce the clouding point of the silicone-based surfactant. Thus, a micelle formed by the silicone-based surfactant is hydrophobized by heating based on the thermal ink jet system and the hydrophobized micelle immediately moves to the gas-liquid interface to reduce the surface tension of a liquid droplet of an ink including the surfactant, to thereby divide the liquid droplet. Probably because of the foregoing, the mist is liable to occur.

Based on the above-mentioned assumptions, the inventors of the present invention have made a further

investigation on a configuration that can achieve both of the suppression of mist when the thermal ink jet system is used and the storage stability of an ink. As a result, the inventors have found the configuration of an ink using a particulate component (a pigment or a resin particle), a compound represented by the general formula (1) to be described later and an acetylene glycol compound in combination. By using the ink having such configuration, even when the thermal ink jet system is used, the occurrence of the mist can be suppressed and furthermore, the storage stability of the ink can be achieved at a high level. Hereinafter, the compound represented by the general formula (1) is also referred to as "first surfactant" and the acetylene glycol compound is also referred to as "second surfactant."

The inventors of the present invention have assumed the mechanism via which the incorporation of the particulate component, the compound represented by the general formula (1) (first surfactant) and the acetylene glycol compound (second surfactant) into the ink can achieve both of the suppression of the mist and the storage stability of the ink to be as described below. First, when the ink includes the particulate component, the first surfactant and the second surfactant, the suppression of the mist and the storage stability of the ink can be achieved. When the both-terminal-modified type or ABn type silicone-based surfactant other than the first surfactant, which is a side-chain-modified type silicone-based surfactant, and the second surfactant are used in combination, the occurrence of the mist at the time of the ejection of the ink cannot be suppressed. In addition, the occurrence of the mist at the time of the ejection cannot be suppressed in each of the following cases: a case in which the first surfactant and the second surfactant are used but the particulate component is absent; a case in which a dye is used instead of the pigment serving as the particulate component; and a case in which a water-soluble resin is used instead of the resin particle serving as the particulate component. It is assumed from the foregoing that the effect by which the suppression of the mist and the storage stability are achieved is exhibited by the specific actions of the particulate component, the first surfactant and the second surfactant.

It has been known that when a plurality of kinds of nonionic surfactants coexist in a liquid, a mixed micelle may be formed depending on a relationship between their structures and hydrophilic-lipophilic balances (HLBs). The above-mentioned effect is obtained probably because of: the formation of a mixed micelle by the first surfactant and the second surfactant; and the coexistence of the particulate component.

In the case where the mixed micelle is formed, even when heating based on the thermal ink jet system reduces the clouding point of the first surfactant to hydrophobize the surfactant, the hydrophobization of the surface of the mixed micelle may be suppressed by the hydrophilic moiety of the second surfactant adjacent to the first surfactant in the mixed micelle. Meanwhile, the inside of the mixed micelle is in a state in which a hydrophobic moiety and a hydrophilic moiety coexist because the mixed micelle contains not only the second surfactant but also the first surfactant in the state of being hydrophobized by the heating based on the thermal ink jet system. It is conceivable from the foregoing that although the hydrophobicity of the mixed micelle reduces to suppress the movement thereof to the gas-liquid interface of a liquid droplet of the ink, the hydrophobic moiety is present on the surface of the mixed micelle and hence the action by which the mixed micelle is moved to the gas-liquid interface of the liquid droplet occurs. The particle surface of the pigment or the resin particle serving as the particulate component has a hydrophobic moiety and hence the hydrophobic moiety of the mixed micelle causes the mixed micelle and the particulate component to efficiently interact with each other to limit the movement of the mixed micelle to the gas-liquid interface. Probably as a result of the foregoing, the mixed micelle is hardly present at the gas-liquid interface of the liquid droplet and hence a reduction in surface tension of the liquid droplet is suppressed to enable the suppression of the occurrence of the mist. In addition, the ink includes the first surfactant that has desorbed from the mixed micelle to be present under a monomolecular state. The first surfactant that has desorbed from the mixed micelle may be hydrophobized by the heating based on the thermal ink jet system to reduce the surface tension of the liquid droplet, to thereby facilitate the occurrence of the mist. However, it is conceivable that the occurrence of the mist is also able to be suppressed by the action of the particulate component adsorbing the first surfactant that has been hydrophobized.

As described above, a suppressing effect on the occurrence of the mist cannot be obtained by using the dye or the water-soluble resin instead of the particulate component. A possible reason for the foregoing is as described below. Unlike the pigment or the resin particle, the dye or the water-soluble resin is free of a hydrophobic moiety that may form a particle. Accordingly, an interaction between the dye or the water-soluble resin and the mixed micelle is weak and hence the movement of the mixed micelle to the gas-liquid interface of the liquid droplet cannot be suppressed. Probably because of the foregoing, a suppressing effect on the occurrence of the mist is not obtained. In addition, when only the second surfactant is used as a surfactant in the ink, the mist is expected to be liable to occur. In contrast, a possible reason why the configuration of the ink of the present invention can suppress the occurrence of the mist is the fact that the strong association force of the first surfactant captures the second surfactant to suppress its desorption from the mixed micelle.

In addition, the reason why the ink using the silicone-based surfactant other than the first surfactant does not provide a suppressing effect on the occurrence of the mist is assumed to be as described below. The silicone-based surfactant other than the first surfactant hardly forms a mixed micelle with the second surfactant because the chain length of the siloxane skeleton of the surfactant and a balance between the hydrophilic moiety and hydrophobic moiety thereof are different from those of the first surfactant. Accordingly, the silicone-based surfactant other than the first surfactant hardly forms a mixed micelle with the second surfactant, and part of the silicone-based surfactant other than the first

surfactant is present as a single molecule or forms not a mixed micelle but a single micelle. Probably because of the foregoing, the occurrence of the mist cannot be suppressed.

In addition, the inventors have found that the adoption of the above-mentioned configuration improves the storage stability of the ink. A possible reason therefor is that a hydroxide ion serving as one cause for the hydrolysis of the silicone-based surfactant is hydrogen-bonded to and captured by a hydroxy group of the second surfactant in the mixed micelle. In addition to the foregoing, the following reason is conceivable: the mixed micelle adsorbed to the particulate component to suppress a nucleophilic attack on the siloxane skeleton in the mixed micelle.

<Aqueous Ink>

As described above, the ink is an aqueous ink to be ejected from a recording head of an ink jet system through the action of thermal energy. The ink includes the particulate component (the pigment or the resin particle) and the surfactants. The surfactants include the first surfactant and the second surfactant. The ink of the present invention does not need to be a so-called "curable ink." Accordingly, the ink of the present invention may be free of a compound such as a polymerizable monomer that can be polymerized by the application of external energy. The respective components for forming the ink and the like are described in detail below.

(Particulate Component)

The ink includes, as the particulate component, at least one kind selected from the group consisting of: the pigment and the resin particle. The ink preferably includes at least the pigment as the particulate component. The content (% by mass) of the particulate component in the ink is preferably 0.10% by mass or more to 10.00% by mass or less with respect to the total mass of the ink. In the ink, the mass ratio of the content (% by mass) of the particulate component to the total content (% by mass) of the first surfactant and the second surfactant is preferably 0.01 times or more to 10.00 times or less. In particular, the mass ratio is more preferably 0.10 times or more to 5.00 times or less, still more preferably 0.10 times or more to 2.00 times or less.

[Pigment]

When the pigment is used as the particulate component, the content (% by mass) of the pigment in the ink is preferably 0.10% by mass or more to 10.00% by mass or less, more preferably 0.50% by mass or more to 6.00% by mass or less with respect to the total mass of the ink. An ink free of the pigment serving as the particulate component may be used as, for example, a clear ink free of a coloring material or a dye ink containing a dye as its coloring material.

Specific examples of the pigment may include: inorganic pigments, such as carbon black and titanium oxide; and organic pigments, such as azo, phthalocyanine, quinacridone, isoindolinone, imidazolone, diketopyrrolopyrrole and dioxazine.

Products that may each be used as the pigment are classified into, for example, a resin-dispersed pigment using a resin as its dispersant and a self-dispersible pigment having a hydrophilic group bonded to its particle surface depending on their dispersion systems. In addition, for example, a resin-bonded type pigment having a resin-containing organic group chemically bonded to its particle surface and a microcapsule pigment whose particle surface is covered with a resin or the like may each be used. A pigment of any dispersion system may be used in the ink. Further, pigments different from each other in dispersion system may be used in combination. Of those, a system (resin-dispersed pigment) including dispersing a pigment through the action of a resin dispersant that is caused to physically adsorb to its particle surface (e.g., a water-soluble resin including a unit having an acid group and a unit having no acid group) is preferred. A unit selected from the same units as those listed as examples of a unit for forming the resin particle to be described later may be used as a unit for forming the water-soluble resin to be used as the resin dispersant.

[Resin Particle]

When the resin particle is used as the particulate component, a resin having any structure may be used as a resin species for forming the resin particle as long as the resin may be used in an aqueous ink. Examples thereof may include an acrylic resin, a urethane resin, a polyamide resin, a polyester resin, a polyvinyl alcohol resin and a polyolefin resin. A resin particle formed of one or two or more kinds of those resins may be incorporated into the ink. When the resin particle is used as the particulate component, the content (% by mass) of the resin particle in the ink is preferably 0.10% by mass or more to 5.00% by mass or less, more preferably 0.10% by mass or more to 3.00% by mass or less with respect to the total mass of the ink. In particular, the content is still more preferably 0.50% by mass or more to 2.00% by mass or less.

The term "resin particle" refers to a resin, which is not dissolved in an aqueous medium for forming the ink, and specifically means a resin that may be present in the aqueous medium under the state of forming a particle whose particle

diameter may be measured by a dynamic light scattering method. Meanwhile, the term "water-soluble resin" refers to a resin, which may be dissolved in the aqueous medium for forming the ink, and specifically means a resin that may be present in the aqueous medium under the state of not forming a particle whose particle diameter may be measured by the dynamic light scattering method. The term "resin particle" may be replaced with the term "water-dispersible resin (water-insoluble resin)."

Whether or not a resin is a "resin particle" can be judged in accordance with the following method. First, a liquid (resin solid content: 10% by mass) containing the resin neutralized with an alkali (e.g., sodium hydroxide or potassium hydroxide) corresponding to its acid value is prepared. Next, the prepared liquid is diluted with pure water tenfold (on a volume basis) to prepare a sample solution. Then, the particle diameter of the resin in the sample solution is measured by a dynamic light scattering method. In this case, when a particle having the particle diameter is observed, the resin can be judged to be a "resin particle" (water-dispersible resin). Meanwhile, when no particle having the particle diameter is observed, it can be judged that the resin is not a "resin particle" (but a "water-soluble resin"). A particle size analyzer (e.g., an analyzer available under the product name "UPA-EX150" from Nikkiso Co., Ltd.) or the like may be used as a particle size distribution-measuring apparatus based on the dynamic light scattering method. Measurement conditions at this time may be set, for example, as follows: SetZero: 30 seconds, number of times of measurement: three times, measurement time: 180 seconds, shape: truly spherical shape and refractive index: 1.59. The particle size distribution-measuring apparatus to be used, the measurement conditions and the like are of course not limited to the foregoing. It is because of the following purpose that the particle diameter is measured with the neutralized resin: to recognize the formation of a particle even when the resin is sufficiently neutralized to be brought into such a state as to more hardly form a particle. A resin having a particle shape even under such conditions is present under a particle state even in the aqueous ink.

The resin particle is preferably a particle having a so-called core-shell structure including a core portion and a shell portion that covers the core portion. Of such particles, the following resin particle is preferably used: the resin particle includes a core formed only of a unit having no acid group and a shell formed so as to include a unit having an acid group; and the resin particle includes a specific unit. Specifically, at least one of the unit for forming the core and the unit for forming the shell preferably includes a unit derived from a (meth)acrylic acid ester. When the resin particle having such a core-shell structure is used, the resin particle easily maintains its shape in a liquid droplet of the ink. Accordingly, the mixed micelle of the first surfactant and the second surfactant can be effectively caused to adsorb to the resin particle and hence a suppressing effect on the occurrence of the mist is easily expressed. When the core portion only includes the unit having no acid group, in other words, the core portion does not include any unit having an acid group, the hydrophilicity of a resin for forming the core portion is lowered and hence the resin particle easily maintains its shape in a liquid droplet ejected by the thermal ink jet system. Accordingly, a suppressing effect on the occurrence of the mist can be improved. In addition, in the case of a resin whose shell portion is formed of the unit having an acid group, an aggregation of the resin particle is less likely to occur because hydrophilicity of the resin particle is higher than a resin particle whose shell portion is formed only of the unit having no acid group. Accordingly, the mixed micelle can be effectively caused to adsorb to the resin particle and hence a suppressing effect on the occurrence of the mist can be improved. In addition, when at least one of the unit for forming the core and the unit for forming the shell includes the unit derived from the (meth)acrylic acid ester, the aggregation of the resin particle in the ink is easily suppressed and hence the storage stability of the ink can be further improved.

A resin species for forming the resin particle having a core-shell structure may be, for example, an acrylic resin obtained by (co)polymerizing an acrylic monomer, such as (meth)acrylic acid or a (meth)acrylic acid ester. The "unit" of a resin as used herein means a repeating unit derived from one monomer. In addition, the description "(meth)acrylic acid" represents "acrylic acid or methacrylic acid" and the description "(meth)acrylate" represents "an acrylate or a methacrylate."

Examples of a monomer having no acid group that becomes the unit having no acid group through polymerization include: monomers each having a hydroxy group, such as 2-hydroxyethyl (meth)acrylate, 3-hydroxypropyl (meth)acrylate and 3-methyl-5-hydroxypentyl (meth)acrylate; monomers each having an aromatic group, such as styrene, α-methylstyrene and benzyl (meth)acrylate; and alkyl (meth)acrylates, such as methyl (meth)acrylate, ethyl (meth)acrylate, isopropyl (meth)acrylate, n-butyl (meth)acrylate, isobutyl (meth)acrylate, tert-butyl (meth)acrylate and 2-ethylhexyl (meth)acrylate. The monomers having no acid groups may be used alone or in combination thereof.

Examples of a monomer having an acid group that becomes the unit having an acid group through polymerization include: monomers each having a carboxylic acid group, such as (meth)acrylic acid, maleic acid, itaconic acid and fumaric acid; monomers each having a sulfonic acid group such as styrenesulfonic acid; monomers each having a phosphonate group, such as ethyl 2-phosphonate (meth)acrylate; and anhydrides and salts of those monomers. Examples of the salts include: alkali metal salts, such as lithium, sodium and potassium salts; ammonium salts; and organic ammonium salts. The monomers each having an acid group may be used alone or in combination thereof.

(Surfactant)

The ink includes the first surfactant, that is, the compound represented by the following general formula (1). The compound represented by the general formula (1) is a silicone-based surfactant having a structure obtained by introducing an ethylene oxide chain whose terminal has been methylated into a side chain of a polydimethylsiloxane structure. The ink may include one or two or more kinds of the compounds each represented by the general formula (1) as the first surfactant.

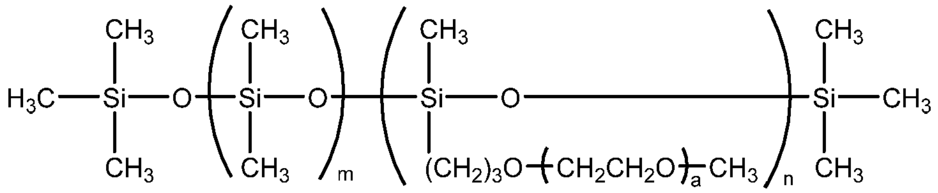 (1)

In the general formula (1), "m" and "n" each independently represent an integer of 1 or more and satisfy a relationship of m+n≤10, and "a" represents an integer of 10 or more to 20 or less. "m" and "n" each independently represent an integer of 1 or more to 9 or less, preferably an integer of 1 or more to 8 or less as long as the relationship of m+n≤10 is satisfied. A case in which "m" represents an integer of 1 or more to 8 or less and "n" represents 1 or 2 is more preferred.

The weight-average molecular weight (Mw) of the compound represented by the general formula (1) is preferably 800 or more to 12,000 or less, more preferably 800 or more to 2,000 or less, still more preferably 1,000 or more to 1,500 or less. The weight-average molecular weight (Mw) may be measured by gel permeation chromatography (GPC) using tetrahydrofuran (THF) as a mobile phase. A method of measuring the Mw of the compound represented by the general formula (1) is specifically as described below. The Mw of each of surfactants S1 to S5 and S8 to S16 used in Examples to be described later was measured by a preferred measurement method described below. Measurement conditions, such as a filter, a column, and a standard polystyrene sample and its molecular weight, are not limited to those described below.

The weight-average molecular weight (Mw) of the compound represented by the general formula (1) may be measured by gel permeation chromatography (GPC) using tetrahydrofuran (THF) as a mobile phase. Measurement conditions, such as a filter, a column, and a standard polystyrene sample and its molecular weight, are not limited to those described below. First, the sample to be subjected to measurement is loaded into tetrahydrofuran (THF) and is left at rest for several hours to be dissolved therein. Thus, a solution is prepared. After that, the solution is filtered with a solvent-resistant membrane filter having a pore size of 0.2 μm to provide a sample solution. The concentration of the sample in the sample solution is adjusted so that the content of the silicone-based surfactant may be from 0.1% by mass to 0.3% by mass. A refractive index detector (RI detector) is used in the GPC. In addition, to accurately measure the molecular weight range of from $10^3$ to $2\times10^6$, a plurality of commercial polystyrene gel columns are preferably combined. For example, four products of Shodex LF-804 (manufactured by Showa Denko K.K.) may be used in combination or products corresponding thereto may be used. THF is flowed as a mobile phase through the columns stabilized in a heat chamber at 40.0°C at a flow rate of 1 mL/min and about 0.1 mL of the above-mentioned sample solution is injected into the columns. The weight-average molecular weight of the sample is determined with a molecular weight calibration curve produced from a standard polystyrene sample. A sample having a molecular weight of from about $10^2$ to about $10^7$ (manufactured by, for example, Polymer Laboratories) is used as the standard polystyrene sample. In addition, it is appropriate to use at least about 10 kinds of standard polystyrene samples.

The compound represented by the general formula (1) is obtained by, for example, an addition reaction between a compound represented by the following general formula (A) and a compound represented by the following general formula (B).

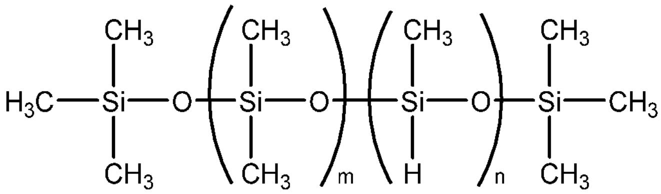 (A)

In the general formula (A), "m" and "n" are identical in meaning to "m" and "n" in the general formula (1), respectively.

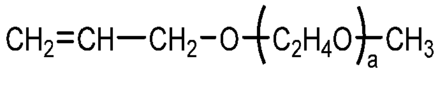 (B)

In the general formula (B), "a" is identical in meaning to "a" in the general formula (1).

The compound represented by the general formula (A) is a polysiloxane compound having "n" hydrogen atoms bonded to "n" Si atoms in the general formula (A). In addition, the compound represented by the general formula (B) is a methoxy-polyethylene glycol-allyl ether having an ethylene oxide unit, having an allyloxy group ($CH_2$=CH-$CH_2$-O-) at one terminal thereof and having a methyl group (-$CH_3$) at the other terminal thereof.

The content (% by mass) of the first surfactant in the ink is preferably 0.05% by mass or more to 4.00% by mass or less with respect to the total mass of the ink. The above-mentioned content (% by mass) of the first surfactant in the ink is preferably 0.05% by mass or more, more preferably 0.10% by mass or more and is more preferably 2.00% by mass or less, still more preferably 1.00% by mass or less.

The ink includes the second surfactant, that is, the acetylene glycol compound. The acetylene glycol compound is a compound having an acetylene skeleton substituted with a plurality of hydroxy groups and an ethylene oxide chain may be present between the acetylene skeleton and each of the hydroxy groups. A compound represented by the following general formula (2) is preferred as the second surfactant. The ink may include, as the second surfactant, one or two or more kinds of the acetylene glycol compounds such as the compound represented by the general formula (2).

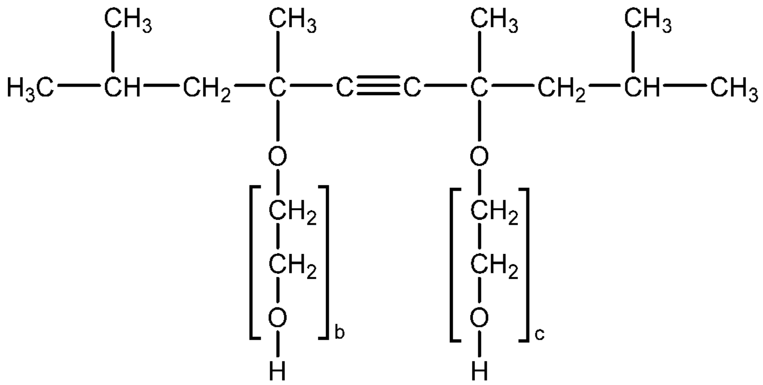

(2)

In the general formula (2), "b" and "c" each independently represent a positive integer.

"b" and "c" in the general formula (2) each represent the addition number of ethylene oxide groups (-$CH_2CH_2O$-) serving as hydrophilic groups and each independently represent a positive integer. "b" and "c" each independently represent preferably an integer of 1 or more to 50 or less, more preferably an integer of 1 or more to 20 or less. The sum "b+c" is preferably 4 or more, more preferably 6 or more. In addition, the sum "b+c" is preferably 50 or less, more preferably 20 or less.

A commercially available product may be used as the acetylene glycol compound (second surfactant). Specific examples of the second surfactant may include products available under the following product names: ACETYLENOL E60 and ACETYLENOL E100 (each of which is manufactured by Kawaken Fine Chemicals Co., Ltd.); and SURFYNOL 104, SURFYNOL 465 and SURFYNOL 485 (each of which is manufactured by Nissin Chemical Industry Co., Ltd.).

The content (% by mass) of the second surfactant in the ink is preferably 0.10% by mass or more to 3.00% by mass or less with respect to the total mass of the ink. The above-mentioned content (% by mass) of the second surfactant in the ink is more preferably 0.20% by mass or more to 3.00% by mass or less, still more preferably 0.50% by mass or more to 2.50% by mass or less.

In the ink, the mass ratio of the content (% by mass) of the first surfactant to the content (% by mass) of the second surfactant is preferably 0.05 times or more to 3.00 times or less, particularly preferably 0.05 times or more to 2.00 times or less. When the above-mentioned mass ratio is 0.05 times or more, the mist is easily suppressed. This is probably because in the mixed micelle of the first surfactant and the second surfactant, the capture of the second surfactant by the strong association force of the first surfactant is sufficiently performed. From the viewpoint that the mist is more easily suppressed, the above-mentioned mass ratio is more preferably 0.10 times or more. Meanwhile, when the above-mentioned mass ratio is 2.00 times or less, the mist is easily suppressed and the storage stability of the ink is easily improved. This is probably because the first surfactant is suppressed from forming a micelle alone.

(Other Resin)

In addition to the resin dispersant suitable for dispersing the pigment serving as the particulate component and the resin particle serving as the particulate component, any other resin (water-soluble resin) may be incorporated into the ink. A resin having any structure may be used as the other resin as long as the resin may be used in an aqueous ink. Examples thereof may include an acrylic resin, a urethane resin, a polyamide resin, a polyester resin, a polyvinyl alcohol resin and a polyolefin resin. One or two or more kinds of those resins may be incorporated into the ink.

The ink preferably includes a urethane resin out of those resins and more preferably includes a urethane resin having a unit derived from a polyisocyanate, a unit derived from a polyol having no acid group and a unit derived from a polyol having an acid group. A urethane bond or a urea bond in the urethane resin causes a hydrogen-bonding interaction with a hydroxide ion in the ink to weaken the reactivity of the hydroxide ion. Accordingly, it is conceivable that the decomposition of the compound represented by the general formula (1) hardly occurs and hence the storage stability of the ink is further improved. The urethane resin may be a water-soluble urethane resin, which is dissolved in the aqueous medium for forming the ink, or may be a water-dispersible urethane resin, which is dispersed in the aqueous medium for forming the ink. Of those, a water-soluble urethane resin is preferred.

The polyisocyanate is a compound having 2 or more isocyanate groups in a molecular structure thereof. Examples of the polyisocyanate may include an aliphatic polyisocyanate and an aromatic polyisocyanate.

Examples of the aliphatic polyisocyanate may include: polyisocyanates each having a chain structure, such as tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate and 3-methylpentane-1,5-diisocyanate; and polyisocyanates each having a cyclic structure, such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanatomethyl)cyclohexane.

Examples of the aromatic polyisocyanate may include tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, a dialkyldiphenylmethane diisocyanate, a tetraalkyldiphenylmethane diisocyanate and $\alpha,\alpha,\alpha',\alpha'$-tetramethylxylylene diisocyanate. Those polyisocyanates may be used alone or in combination thereof.

Examples of the polyol having no acid group may include a polyether polyol, a polyester polyol and a polycarbonate polyol. The polyols having no acid groups may be used alone or in combination thereof. The number-average molecular weight of the polyol having no acid group is preferably 400 or more to 4,000 or less. In addition, the polyol having no acid group is preferably a polyether polyol.

Examples of the polyether polyol may include a polyalkylene glycol and a product obtained by addition polymerization of an alkylene oxide and a dihydric alcohol or a polyhydric alcohol that is trihydric or more. Examples of the polyalkylene glycol may include polyethylene glycol, polypropylene glycol, polytetramethylene glycol and an ethylene glycol-propylene glycol copolymer. Examples of the alkylene oxide may include ethylene oxide, propylene oxide, butylene oxide and an $\alpha$-olefin oxide. Examples of the dihydric alcohol may include hexamethylene glycol, tetramethylene glycol, ethylene glycol, diethylene glycol, propylene glycol, dipropylene glycol, 1,3-butanediol, 1,4-butanediol, 4,4-dihydroxyphenylpropane and 4,4-dihydroxyphenylmethane. Examples of the polyhydric alcohol that is trihydric or more may include glycerin, trimethylolpropane, 1,2,5-hexanetriol, 1,2,6-hexanetriol and pentaerythritol.

Examples of the polyol having an acid group may include polyols each having an acid group, such as a carboxylic acid group, a sulfonic acid group, a phosphate group and a phosphonate group. The acid group is preferably a carboxylic acid group. Examples of the polyol having a carboxylic acid group may include dimethylolacetic acid, dimethylolpropionic acid and dimethylolbutanoic acid. The acid group of the polyol having an acid group may be of a salt type. As a cation for forming a salt, there may be given, for example: ions of alkali metals, such as lithium, sodium and potassium; an ammonium ion; and cations of organic amines such as dimethylamine. The polyols each having an acid group may be used alone or in combination thereof.

In addition, it is more preferred that in the urethane resin, a proportion of a unit derived from the polyol having an acid group present at a molecular terminal relative to the whole unit derived from the polyol having an acid group is 30 mol% or less. An acid group at the terminal approaches the compound represented by the general formula (1) more easily than an acid group in the main chain in the urethane resin does. Accordingly, when the above-mentioned proportion of the unit derived from the polyol having an acid group present at the molecular terminal is reduced to 30 mol% or less, the decomposition of the compound represented by the general formula (1) by the acid group may be more easily suppressed. Thus, the storage stability of the ink is more easily improved. The proportion is preferably 0 mol% or more.

The proportion of the unit derived from the polyol having an acid group present at the molecular terminal in the urethane resin relative to the whole unit derived from the polyol having an acid group therein may be verified by the following method. The urethane resin prepared for the preparation of the ink or the urethane resin appropriately removed from the ink may be used as the urethane resin to be verified. First, the kinds of the polyisocyanate, the polyol having no acid group and the polyol having an acid group are identified through the analysis of the urethane resin by pyrolysis gas chromatography. Next, a reaction product of the polyisocyanate and the polyol having an acid group that have been identified is dissolved in deuterated dimethyl sulfoxide (deuterated DMSO) and the solution is analyzed by carbon nuclear magnetic resonance spectroscopy ($^{13}C$-NMR). Thus, the chemical shift of carbonyl carbon (in lower magnetic fields) in the unit derived from the polyol having an acid group present at the molecular terminal is identified. Further, the chemical shift of carbonyl carbon (in higher magnetic fields) in the unit derived from the polyol having an acid group present in a molecule is identified.

Next, the proportion of the peak integrated value of the carbonyl carbon in the unit derived from the polyol having an acid group present at the molecular terminal relative to the total of the peak integrated values of the carbonyl carbon in the unit derived from the polyol having an acid group is calculated. Thus, the proportion of the unit derived from the polyol having an acid group present at the molecular terminal in the urethane resin relative to the whole unit derived from the polyol having an acid group therein can be determined. For example, when dimethylolpropionic acid (DMPA) is used, the peak of the carbonyl carbon in the unit derived from the polyol having an acid group present at the molecular terminal is detected at around 176 ppm, though some deviation occurs depending on measurement conditions. In addition, the peak of the carbonyl carbon in the unit derived from the polyol having an acid group present in the molecule is detected at around 175 ppm. Further, when dimethylol butanoic acid (DMBA) is used, the peak of the carbonyl carbon in the unit derived from the polyol having an acid group present at the molecular terminal is detected at around 175 ppm. In addition, the peak of the carbonyl carbon in the unit derived from the polyol having an acid group present in the molecule is detected at around 174 ppm. The number-average molecular weight of the polyol may be calculated by determining the number of repetitions of the unit derived from the polyol through analysis by $^{13}$C-NMR described above.

A chain extender that is difunctional or more may be used for imparting a cross-linked structure to the urethane resin. Examples of the chain extender may include trimethylolmelamine and derivatives thereof, dimethylolurea and derivatives thereof, dimethylolethylamine, diethanolmethylamine, dipropanolethylamine, dibutanolmethylamine, ethylenediamine, propylenediamine, diethylenetriamine, hexylenediamine, triethylenetetramine, tetraethylenepentamine, isophoronediamine, xylylenediamine, diphenylmethanediamine, hydrogenated diphenylmethanediamine, hydrazine, polyamide polyamine, polyethylene polyimine, trimethylolmelamine, diethylenetriamine, triethylenetetramine and tetraethylenepentamine. Those chain extenders may be used alone or in combination thereof.

The content (% by mass) of the other resin in the ink is preferably 0.10% by mass or more to 5.00% by mass or less, more preferably 0.50% by mass or more to 5.00% by mass or less with respect to the total mass of the ink. In particular, the content is still more preferably 1.00% by mass or more to 4.00% by mass or less. Of those, the content (% by mass) of the water-soluble urethane resin in the ink is preferably 0.40% by mass or more to 3.50% by mass or less, more preferably 0.50% by mass or more to 3.00% by mass or less with respect to the total mass of the ink.

(Aqueous Medium)

The ink is an aqueous ink containing at least water as an aqueous medium. Deionized water (ion-exchanged water) is preferably used as the water. The content (% by mass) of the water in the ink is preferably 10.00% by mass or more to 90.00% by mass or less, more preferably 50.00% by mass or more to 90.00% by mass or less with respect to the total mass of the ink.

(Water-soluble Organic Solvent)

The aqueous medium may further contain a water-soluble organic solvent. As the water-soluble organic solvent, for example, monohydric alcohols, polyhydric alcohols, (poly)alkylene glycols, glycol ethers, nitrogen-containing polar solvents and sulfur-containing polar solvents may be used. One or two or more kinds of the water-soluble organic solvents may be used.

Of the water-soluble organic solvents, a first water-soluble organic solvent, which is an alkanediol having a relative dielectric constant of 28.0 or less and having hydroxy groups at both the terminals of its hydrocarbon chain, and a second water-soluble organic solvent having a relative dielectric constant of 40.0 or more are preferably used. The use of the ink further including the first water-soluble organic solvent and the second water-soluble organic solvent described above further facilitates the suppression of the occurrence of mist. The reason therefor is assumed to be as described below. The water-soluble organic solvent having a low relative dielectric constant easily interacts with the polysiloxane moiety of the first surfactant and the water-soluble organic solvent having a high relative dielectric constant easily interacts with the polyethylene oxide moiety of the first surfactant. Accordingly, an interaction between the respective moieties is assumed to be weakened. In addition, the first water-soluble organic solvent whose hydrophilic groups are present at both the terminals of its alkyl chain hardly causes steric hindrance with the first surfactant and hence easily approaches the surfactant. Accordingly, the hydrophobic moiety of the main chain of the solvent easily interacts with the polysiloxane moiety. Accordingly, the molecules of the first surfactant more hardly gather together and hence the mixed micelle of the first surfactant and the second surfactant is smoothly formed with ease. Probably as a result of the foregoing, a suppressing effect on the occurrence of the mist is improved.

Examples of the first water-soluble organic solvent may include 1,5-pentanediol (27.0), 3-methyl-1,5-pentanediol (23.9) and 1,6-hexanediol (7.1) where numerical values in parentheses represent relative dielectric constants at 25°C. One or two or more kinds of the first water-soluble organic solvents may be used. The relative dielectric constant of the first water-soluble organic solvent is preferably 3.0 or more. In addition, examples of the second water-soluble organic solvent may include glycerin (42.3) and ethylene glycol (40.4) where numerical values in parentheses represent relative dielectric

constants at 25°C. One or two or more kinds of the second water-soluble organic solvents may be used. The relative dielectric constant of the second water-soluble organic solvent is preferably 120.0 or less.

The relative dielectric constants of the water-soluble organic solvents may each be measured with a dielectric constant meter (e.g., a product available under the product name "BI-870" manufactured by Brookhaven Instruments Corporation) under the condition of a frequency of 10 kHz. The relative dielectric constant of a water-soluble organic solvent that is a solid at 25°C is a value calculated from the following equation (I) after the measurement of the relative dielectric constant of a 50% by mass aqueous solution thereof. Although the term "water-soluble organic solvent" typically refers to a liquid, in the present invention, a solvent that is a solid at 25°C (normal temperature) is also included in the category of the water-soluble organic solvent.

$$\varepsilon_{sol}=2\varepsilon_{50\%}-\varepsilon_{water}\cdots(I)$$

$\varepsilon_{sol}$: The relative dielectric constant of a water-soluble organic solvent that is a solid at 25°C
$\varepsilon_{50\%}$: The relative dielectric constant of a 50% by mass aqueous solution of the water-soluble organic solvent that is a solid at 25°C
$\varepsilon_{water}$: The relative dielectric constant of water

A water-soluble organic solvent that is generally used in the aqueous ink and is a solid at 25°C may be, for example, 1,6-hexanediol, trimethylolpropane, ethylene urea, urea or polyethylene glycol having a number-average molecular weight of 1,000. Herein, the reason why the relative dielectric constant of a water-soluble organic solvent that is a solid at 25°C is determined from the relative dielectric constant of a 50% by mass aqueous solution thereof is as described below. Of the water-soluble organic solvents that are each a solid at 25°C, some solvents that may each serve as a constituent component for the aqueous ink each have the following difficulty: it is difficult to prepare an aqueous solution having a concentration as high as more than 50% by mass. Meanwhile, in an aqueous solution having a concentration as low as 10% by mass or less, the relative dielectric constant of water becomes dominant to preclude the obtainment of a probable (effective) value of the relative dielectric constant of each of the water-soluble organic solvents. In view of the foregoing, the inventors of the present invention have made an investigation. As a result, the inventors have revealed that out of the water-soluble organic solvents that are each a solid at 25°C, most solvents that may each be used in the ink enable the preparation of aqueous solutions to be subjected to the measurement and their relative dielectric constants to be determined are each consistent with the effect of the present invention. For such reason, the inventors have decided to utilize a 50% by mass aqueous solution. In the case of a water-soluble organic solvent that is a solid at 25°C, the solvent having so low a solubility in water that a 50% by mass aqueous solution thereof cannot be prepared, an aqueous solution having a saturated concentration is utilized and the value of its relative dielectric constant calculated in conformity with the case where the above-mentioned $\varepsilon_{sol}$ is determined is used for convenience.

The content (% by mass) of the water-soluble organic solvents in the ink is preferably 50.00% by mass or less, more preferably 3.00% by mass or more to 30.00% by mass or less with respect to the total mass of the ink. The content (% by mass) of the first water-soluble organic solvent in the ink is still more preferably 1.00% by mass or more to 10.00% by mass or less with respect to the total mass of the ink. The content (% by mass) of the second water-soluble organic solvent in the ink is still more preferably 2.00% by mass or more to 25.00% by mass or less with respect to the total mass of the ink.

(Other Additives)

The ink may contain, in addition to the above-mentioned components, various additives, such as a surfactant, a pH adjustor, a rust inhibitor, an antiseptic agent, a fungicide, an antioxidant, a reduction inhibitor, an evaporation accelerator and a chelating agent, as required.

(Compound represented by General Formula (3))

The ink preferably includes a compound represented by the following general formula (3):

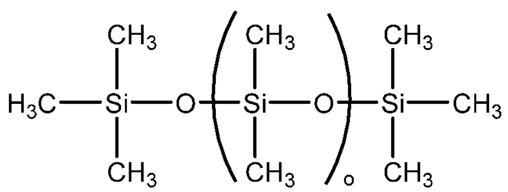

(3)

in the general formula (3), "o" represents an integer of 1 or more to 10 or less.

It is assumed that the compound represented by the general formula (3) easily interacts with the polysiloxane moiety of the compound represented by the general formula (1) to alleviate the decomposition of the polysiloxane moiety by a hydroxide ion in the ink. Accordingly, the storage stability of the ink may be further improved. In particular, a case in which "o" in the general formula (3) represents 1 or more is preferred because the storage stability of the ink is further improved. Meanwhile, a case in which "o" in the general formula (3) represents 10 or less is preferred because a suppressing effect on the occurrence of the mist can be sufficiently obtained. In addition, a case in which, in the ink, the mass ratio of the content (% by mass) of the compound represented by the general formula (3) to the content (% by mass) of the first surfactant is 0.01 times or less is more preferred because a suppressing effect on the occurrence of the mist can be sufficiently obtained. The above-mentioned mass ratio is preferably 0.0005 times or more.

The content (% by mass) of the compound represented by the general formula (3) in the ink is preferably 0.040% by mass or less with respect to the total mass of the ink. The above-mentioned content (% by mass) of the compound represented by the general formula (3) in the ink is more preferably 0.0001% by mass or more to 0.020% by mass or less, still more preferably 0.0001% by mass or more to 0.010% by mass or less.

(Physical Properties of Ink)

The viscosity of the ink at 25°C is preferably 1.0 mPa·s or more to 10.0 mPa·s or less, more preferably 1.0 mPa·s or more to 5.0 mPa·s or less, particularly preferably 1.0 mPa·s or more to 3.0 mPa·s or less. The surface tension (static surface tension) of the ink at 25°C is preferably 10.0 mN/m or more to 60.0 mN/m or less, more preferably 20.0 mN/m or more to 60.0 mN/m or less, particularly preferably 30.0 mN/m or more to 50.0 mN/m or less. The pH of the ink at 25°C is preferably 5.0 or more to 10.0 or less, more preferably 7.0 or more to 9.5 or less.

<Ink Cartridge>

An ink cartridge of the present invention includes an ink and an ink storage portion configured to store the ink. In addition, the ink stored in the ink storage portion is the aqueous ink of the present invention described above. FIG. 1 is a sectional view for schematically illustrating an ink cartridge according to one embodiment of the present invention. As illustrated in FIG. 1, an ink supply port 12 for supplying an ink to a recording head is arranged on the bottom surface of the ink cartridge. The inside of the ink cartridge is the ink storage portion for storing the ink. The ink storage portion includes an ink storage chamber 14 and an absorbent storage chamber 16 and the chambers communicate to each other through a communication port 18. In addition, the absorbent storage chamber 16 communicates to the ink supply port 12. While a liquid ink 20 is stored in the ink storage chamber 14, absorbents 22 and 24 each configured to hold the ink in a state of being impregnated therewith are stored in the absorbent storage chamber 16. The ink storage portion may be of a form that is free of an ink storage chamber configured to store the liquid ink and is configured to hold the total amount of the ink to be stored with the absorbents. In addition, the ink storage portion may be of a form that is free of an absorbent and is configured to store the total amount of the ink in a liquid state. Further, an ink cartridge of a form formed to include the ink storage portion and a recording head may be adopted.

<Ink Jet Recording Method>

An ink jet recording method of the present invention is a method including ejecting the aqueous ink of the present invention described above from a recording head of an ink jet system to record an image on a recording medium. As a system of ejecting the ink, a system involving applying thermal energy to the ink is utilized. The step of the ink jet recording method may be a known step except that the ink of the present invention is used. In the present invention, a step of applying the ink to the recording medium only needs to be performed and another treatment (e.g., a step of applying a reaction liquid that reacts with the ink, a step of curing the image through the application of, for example, an active energy ray or a step of heating the image) may not be performed.

FIG. 2A and FIG. 2B are views for schematically illustrating an example of an ink jet recording apparatus to be used in the ink jet recording method of the present invention, in which FIG. 2A is a perspective view of the main portion of the ink jet recording apparatus and FIG. 2B is a perspective view of a head cartridge. A conveying unit (not shown) configured to convey a recording medium 32 and a carriage shaft 34 are arranged in the ink jet recording apparatus. A head cartridge 36 may be mounted on the carriage shaft 34. The head cartridge 36 includes recording heads 38 and 40 and is formed so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

Any recording medium may be used as the recording medium on which recording is to be performed with the ink of

the present invention. However, a recording medium having ink permeability, such as plain paper or a recording medium including a coating layer (glossy paper or art paper), is preferably used. Of those, a recording medium including a coating layer is preferably used because at least part of pigment particles in the ink can be caused to exist on or near the surface of the recording medium. Such a recording medium may be selected in accordance with, for example, the intended uses of a recorded product having recorded thereon an image. Examples thereof include: glossy paper suitable for obtaining an image having a glossy feeling of photographic image quality; and art paper taking advantage of the texture (e.g., drawing paper-like, canvas-like or Japanese paper-like texture) of a substrate for representing, for example, a picture, a photograph and a graphic image in accordance with preference. Of those, so-called glossy paper in which the surface of its coating layer has glossiness is particularly preferably used.

[Examples]

The present invention is described in more detail below by way of Examples and Comparative Examples. However, the present invention is by no means limited to Examples below, as long as the gist thereof is not exceeded. In the description of the amounts of components, "part(s)" and "%" are by mass unless otherwise specified.

<Conditions for Analysis of Resin>

The acid value of a resin was measured by: dissolving the resin in tetrahydrofuran; and measuring the acid value of the solution with a 0.5 mol/L solution of potassium hydroxide in ethanol serving as a titration reagent and an automatic potentiometric titrator (product name: "AT-510", manufactured by Kyoto Electronics Manufacturing Co., Ltd.). The weight-average molecular weight (Mw) and number-average molecular weight (Mn) of the resin were measured with polystyrene serving as a standard substance, tetrahydrofuran serving as a solvent and a gel permeation chromatograph (product name: "Alliance GPC 2695", manufactured by Waters Corporation) including a differential refractive index detector.

<Preparation of Water-soluble Resin>

(Acrylic Resin 1)

By an ordinary method, 80.7 parts of styrene and 19.3 parts of acrylic acid were copolymerized to synthesize an acrylic resin 1 that was a water-soluble resin having an acid value of 150 mgKOH/g and a weight-average molecular weight of 8,000. The resultant acrylic resin 1 was dissolved in ion-exchanged water by adding potassium hydroxide whose molar amount was equal to the acid value. Thus, an aqueous solution of the acrylic resin 1 in which the content of the acrylic resin 1 was 20.0% was prepared.

(Acrylic Resin 2)

By an ordinary method, 80.7 parts of styrene and 19.3 parts of acrylic acid were copolymerized to synthesize an acrylic resin 2 that was a water-soluble resin having an acid value of 150 mgKOH/g and a number-average molecular weight of 1,600. The resultant acrylic resin 2 was dissolved in ion-exchanged water by adding potassium hydroxide whose molar amount was equal to the acid value. Thus, an aqueous solution of the acrylic resin 2 in which the content of the acrylic resin 2 was 20.0% was prepared.

<Preparation of Pigment Dispersion Liquid>

(Pigment Dispersion Liquid 1)

The mixture of 15.0 parts of carbon black (pigment), 30.0 parts of the aqueous solution of the acrylic resin 1 and 55.0 parts of water was loaded into a sand grinder and subjected to dispersion treatment for 1 hour. After that, centrifugation treatment was performed to remove a coarse particle and the residue was filtered with a microfilter having a pore size of 3.0 μm (manufactured by FUJIFILM Corporation) under pressure, followed by the addition of an appropriate amount of ion-exchanged water. Thus, a pigment dispersion liquid 1 was obtained. The content of the pigment in the pigment dispersion liquid 1 was 10.0% and the content of the resin therein was 3.0%.

(Pigment Dispersion Liquid 2)

A pigment dispersion liquid 2 was obtained by the same procedure as that of the preparation of the pigment dispersion liquid 1 except that the kind of the pigment was changed to C.I. Pigment Blue 15:3. The content of the pigment in

the pigment dispersion liquid 2 was 10.0% and the content of the resin therein was 3.0%.

(Pigment Dispersion Liquid 3)

A pigment dispersion liquid 3 was obtained by the same procedure as that of the preparation of the pigment dispersion liquid 1 except that the kind of the pigment was changed to C.I. Pigment Red 122. The content of the pigment in the pigment dispersion liquid 3 was 10.0% and the content of the resin therein was 3.0%.

(Pigment Dispersion Liquid 4)

A pigment dispersion liquid 4 was obtained by the same procedure as that of the preparation of the pigment dispersion liquid 1 except that the kind of the pigment was changed to C.I. Pigment Yellow 74. The content of the pigment in the pigment dispersion liquid 4 was 10.0% and the content of the resin therein was 3.0%.

(Pigment Dispersion Liquid 5)

A solution obtained by dissolving 2.5 g of concentrated hydrochloric acid in 5.5 g of water was brought into the state of being cooled to 5°C, followed by the addition of 0.7 g of 4-aminophthalic acid thereto under the state. A container containing the solution was loaded into an ice bath. While the temperature of the solution was held at 10°C or less by stirring the solution, a solution obtained by dissolving 0.9 g of sodium nitrite in 9.0 g of ion-exchanged water at 5°C was added thereto. After the mixture had been stirred for 15 minutes, 10.0 g of carbon black (specific surface area: 220 $m^2/g$, DBP oil absorption: 105 mL/100 g) was added thereto under stirring and the whole was further stirred for 15 minutes to provide a slurry. The resultant slurry was filtered with filter paper (product name: "STANDARD FILTER PAPER No. 2," manufactured by Advantec Corporation) and its particle was sufficiently washed with water and dried in an oven at 110°C. After that, a sodium ion was substituted with a potassium ion by an ion exchange method. Thus, a self-dispersible pigment having a $-C_6H_3-(COOK)_2$ group bonded to the particle surface of the carbon black was obtained. An appropriate amount of water was added to adjust the content of the pigment. Thus, a pigment dispersion liquid 5 in which the content of the pigment was 10.0% was obtained.

<Synthesis of Resin Particle>

(Resin Particles 1 to 5)

By mixing 2.0 parts of n-hexadecane, 1.0 part of a polymerization initiator (2,2'-azobis-(2-methylbutyronitrile)) and a core-portion monomer (unit: part(s)) shown in Table 1 and stirring for 30 minutes, a mixture was provided. Monomer abbreviations have the following meanings: nBA represents n-butyl acrylate; St represents styrene; and AA represents acrylic acid. The resultant mixture was dropped into 229.5 parts of water having dissolved therein 0.27 part of sodium dodecyl sulfate and then the mixture was stirred for 30 minutes to provide a core-portion monomer mixture. Then, an ultrasonic wave was applied to the core-portion monomer mixture with an ultrasonic homogenizer (product name: "S-150D DIGITAL SONIFIER", manufactured by Branson Ultrasonics Corporation) under the conditions of an output of 400 W, a frequency of 20 kHz and 3 hours to disperse the components. After that, the dispersed product was polymerized under a nitrogen atmosphere at 80°C for 4 hours to synthesize a resin. Thus, a dispersion liquid containing an acrylic resin serving as the core portion of a resin particle was obtained.

Next, 200.0 parts of ion-exchanged water, 0.1 part of potassium persulfate, 8.0 parts of sodium dodecyl sulfate and shell-portion monomers (unit: part(s)) shown in Table 1 were emulsified to provide a monomer emulsified product for a shell portion. Monomer abbreviations have the following meanings: MMA represents methyl methacrylate; nBA represents n-butyl acrylate; St represents styrene; AA represents acrylic acid; and StSA represents styrenesulfonic acid. To 240.0 parts of the dispersion liquid containing the resin serving as the core portion, which had been obtained in advance, 0.1 part of potassium persulfate and 600.0 parts of ion-exchanged water were added and the temperature of the mixture was increased to 75°C under a nitrogen atmosphere. Into the dispersion liquid, 350.0 parts of the monomer emulsified product for a shell portion was dropped over 3 hours. After that, the temperature of the mixture was increased to 85°C and the mixture was stirred for 2 hours so that the monomers were polymerized. Thus, an acrylic resin serving as the shell portion of the resin particle was synthesized. After that, the resin was cooled to 25°C, followed by the addition of an appropriate amount of ion-exchanged water and potassium hydroxide whose molar amount was equal to the acid value of the resin. Thus, a liquid containing each of resin particles 1 to 5, the liquid having a pH of 8.5 and a resin content of 10.0%, was obtained. The resin particles 1 to 5 were each a resin particle including a core and a shell.

Table 1: Conditions for synthesis of resin particles 1 to 5 and their characteristics

| Resin particle | Core-portion monomer (part(s)) | | | Shell-portion monomer (part(s)) | | | | |
|---|---|---|---|---|---|---|---|---|
| | nBA | St | AA | MMA | nBA | St | AA | StSA |
| 1 | 60.0 | | | | 100.0 | | 50.0 | |
| 2 | | 60.0 | | 100.0 | | | | 50.0 |
| 3 | 50.0 | | 10.0 | | 110.0 | | 40.0 | |
| 4 | 60.0 | | | 150.0 | | | | |
| 5 | | 60.0 | | | | 100.0 | 50.0 | |

(Resin Particle 6)

Into a four-necked flask having a volume of 300 mL, the flask including a stirring seal, a stirring machine, a reflux condenser, a septum rubber and a nitrogen-introducing tube, 9.0 parts of styrene, 1.5 parts of acrylic acid, 0.1 part of sodium dodecyl sulfate and 100.0 parts of distilled water were loaded and mixed. The flask was loaded into a thermostat at 70°C. While the contents were stirred at 300 rpm, a nitrogen gas was introduced into the flask to purge the inside of the flask with nitrogen for 1 hour. After that, potassium persulfate dissolved in 100.0 parts of distilled water was injected into the flask with a syringe to initiate polymerization. The termination of the polymerization was recognized through the monitoring of the molecular weight of the resultant polymer by gel permeation chromatography. After the polymer had been purified by ultrafiltration, an appropriate amount of ion-exchanged water and potassium hydroxide whose molar amount was equal to the acid value of the polymer were added to provide a liquid containing a resin particle 6, the liquid having a pH of 8.5 and a resin content of 10.0%. The resin particle 6 was a monolayer resin particle including an acrylic resin.

(Resin Particle 7)

An acrylic-silicone polymer fine particle was synthesized as a resin particle 7 in conformity with the description in Preparation Example 10 of Japanese Patent Application Laid-Open No. 2017-019990 and a liquid in which the content of the resin particle 7 was 40.0% was obtained.

<Synthesis of Urethane Resin>

A four-necked flask including a stirring machine, a temperature gauge, a nitrogen gas-introducing tube and a reflux tube was prepared. A polyisocyanate, a polyol having no acid group and a part (usage amount "a") of dimethylolpropionic acid whose kinds and usage amounts were shown in Table 2, and 200.0 parts of methyl ethyl ketone were loaded into the four-necked flask. Then, the contents were caused to react with each other under a nitrogen gas atmosphere at 80°C for 6 hours. Next, another part (usage amount "b") of dimethylolpropionic acid, ethylenediamine (chain extender) and methanol (stopper) whose kinds and usage amounts were shown in Table 2, and 100.0 parts of methyl ethyl ketone were added to the resultant. The residual ratio of an isocyanate group was identified by FT-IR and the contents were caused to react with each other at 80°C until a desired residual ratio was obtained. Thus, a reaction liquid was obtained. The resultant reaction liquid was cooled to 40°C and then ion-exchanged water was added thereto. While the mixture was stirred with a homomixer at a high speed, an appropriate amount of ion-exchanged water and potassium hydroxide whose molar amount was equal to the acid value of the resin were added thereto to provide a liquid. Methyl ethyl ketone was evaporated from the resultant liquid through decompression under heating. Thus, liquids containing each of water-soluble urethane resins 1 to 7 in which urethane resin contents were each 20.0% were obtained. Each of the resultant urethane resins 1 to 7 was water-soluble. Abbreviations in Table 2 have the following meanings: IPDI represents isophorone diisocyanate; HDI represents hexamethylene diisocyanate; MDI represents diphenylmethane diisocyanate; PPG represents polypropylene glycol having a number-average molecular weight of 2,000; and PTMG represents polytetramethylene glycol having a number-average molecular weight of 2,000.

Hydrochloric acid was added to each of the liquids containing the urethane resins to precipitate the urethane resin. The resin was dried and dissolved in deuterated DMSO to prepare a measurement sample. Then, the prepared sample was analyzed by $^{13}$C-NMR (apparatus name: "Avance 500", manufactured by BRUKER Bio Spin Corporation). Then, the proportion of the peak integrated value of carbonyl carbon in a unit derived from a polyol having an acid group present at a molecular terminal relative to the total of the peak integrated values of the carbonyl carbon in the unit derived from the polyol having an acid group was calculated. The value (proportion) thus calculated was defined as the "proportion of the unit derived from the polyol having an acid group present at the molecular terminal." For example, when

dimethylolpropionic acid is used, the peak of the carbonyl carbon in the unit derived from the polyol having an acid group present at the molecular terminal is detected at around 176 ppm, though some deviation occurs depending on measurement conditions. In addition, the peak of the carbonyl carbon in the unit derived from the polyol having an acid group present in the molecule is detected at around 175 ppm. The results are each shown as "Terminal acid group proportion (mol%)" in Table 2.

Table 2: Conditions for synthesis of urethane resins and their characteristics

| Urethane resin | Synthesis condition | | | | | | | | Characteristic |
|---|---|---|---|---|---|---|---|---|---|
| | Polyisocyanate | | Polyol having no acid group | | Dimethylolpropionic acid | | Ethylenediamine | Methanol | Terminal acid group proportion (mol%) |
| | Kind | Usage amount (part(s)) | Kind | Usage amount (part(s)) | Usage amount "a" (part(s)) | Usage amount "b" (part(s)) | Usage amount (part(s)) | Usage amount (part(s)) | |
| 1 | IPDI | 41.7 | PPG | 36.2 | 18.2 | 3.3 | 0.6 | 2.0 | 15 |
| 2 | IPDI | 41.7 | PTMG | 36.8 | 18.2 | 3.3 | 0.6 | 2.0 | 15 |
| 3 | IPDI HDI | 28.0 10.7 | PPG | 39.8 | 18.2 | 3.3 | | | 15 |
| 4 | MDI | 46.4 | PPG | 32.1 | 18.2 | 3.3 | | | 15 |
| 5 | IPDI | 41.7 | PPG | 36.8 | 14.9 | 6.6 | | | 30 |
| 6 | IPDI | 41.7 | PPG | 36.8 | 14.8 | 6.7 | | | 31 |
| 7 | IPDI | 41.7 | PPG | 36.8 | 21.5 | | | | 0 |

<Preparation of Surfactant>

(Surfactants S1 to S5 and S8 to S16)

A polysiloxane compound and a polyoxyethylene compound were loaded into a glass-made vessel including a temperature gauge and a stirring unit. The compounds were subjected to an addition reaction in the presence of a platinum catalyst to synthesize each of surfactants S1 to S5 and S8 to S16. As the above-mentioned polysiloxane compound, compounds each represented by the following general formula (A-1), and in which "m" and "n" in the general formula (A-1) each represented a number shown in Table 3 were each used. In addition, as the above-mentioned polyoxyethylene compound, compounds each represented by the following general formula (B-1), and in which "a", $R_1$ and $R_2$ in the general formula (B-1) each represented a number or a structure shown in Table 3 were each used. The respective surfactants obtained by the above-mentioned synthesis are compounds each represented by the following general formula (1-1), and in which $R_3$ in the general formula (1-1) represents a structure shown in Table 3. "m", "n", "a" and $R_2$ in the general formula (1-1) correspond to "m", "n", "a" and $R_2$ in the general formulae (A-1) and (B-1) representing the structures of the respective compounds used in the synthesis, respectively. The weight-average molecular weights of the resultant respective surfactants are also shown in Table 3.

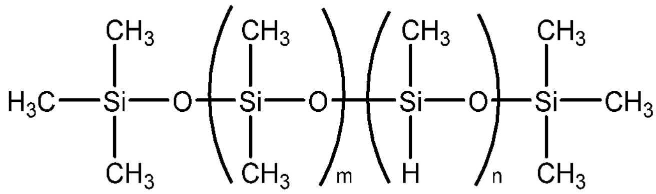
(A-1)

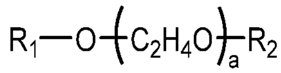
(B-1)

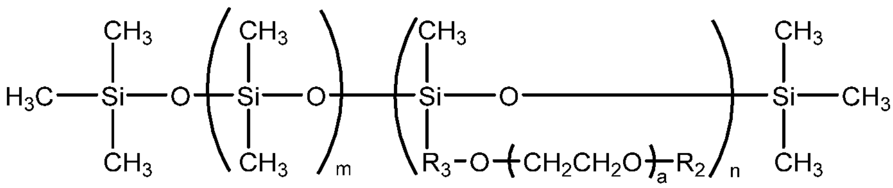
(1-1)

Table 3: Conditions for synthesis of surfactants S1 to S5 and S8 to S16, and their characteristics

| Surfactant | "m" | "n" | "a" | $R_1$ | $R_2$ | $R_3$ | Weight-average molecular weight |
|---|---|---|---|---|---|---|---|
| S1 | 4 | 1 | 15 | $CH_2$=CH-$CH_2$ | $CH_3$ | $(CH_2)_3$ | 1,300 |
| S2 | 1 | 1 | 15 | $CH_2$=CH-$CH_2$ | $CH_3$ | $(CH_2)_3$ | 1,000 |
| S3 | 8 | 2 | 15 | $CH_2$=CH-$CH_2$ | $CH_3$ | $(CH_2)_3$ | 1,500 |
| S4 | 4 | 1 | 10 | $CH_2$=CH-$CH_2$ | $CH_3$ | $(CH_2)_3$ | 1,000 |
| S5 | 4 | 1 | 20 | $CH_2$=CH-$CH_2$ | $CH_3$ | $(CH_2)_3$ | 1,500 |
| S8 | 6 | 5 | 15 | $CH_2$=CH-$CH_2$ | $CH_3$ | $(CH_2)_3$ | 1,400 |
| S9 | 4 | 1 | 9 | $CH_2$=CH-$CH_2$ | $CH_3$ | $(CH_2)_3$ | 1,000 |
| S10 | 4 | 1 | 21 | $CH_2$=CH-$CH_2$ | $CH_3$ | $(CH_2)_3$ | 1,500 |
| S11 | 4 | 1 | 15 | $CH_2$=CH-$CH_2$ | H | $(CH_2)_3$ | 1,200 |
| S12 | 4 | 1 | 15 | $CH_2$=CH-$CH_2$ | $CH_2CH_3$ | $(CH_2)_3$ | 1,300 |
| S13 | 4 | 1 | 15 | $CH_2$=CH | $CH_3$ | $(CH_2)_2$ | 1,200 |
| S14 | 4 | 1 | 15 | $CH_2$=CH-$(CH_2)_3$ | $CH_3$ | $(CH_2)_5$ | 1,300 |
| S15 | 3 | 1 | 11 | $CH_2$=CH-$CH_2$ | $CH_3$ | $(CH_2)_3$ | 1,000 |

(continued)

| Surfactant | "m" | "n" | "a" | $R_1$ | $R_2$ | $R_3$ | Weight-average molecular weight |
|---|---|---|---|---|---|---|---|
| S16 | 5 | 3 | 10 | $CH_2=CH-CH_2$ | $CH_3$ | $(CH_2)_3$ | 1,100 |

(Surfactant S6)

A polysiloxane compound represented by the following general formula (C) and a polyoxyethylene compound represented by the following general formula (D) were loaded into a glass-made vessel including a temperature gauge and a stirring unit. The compounds were subjected to an addition reaction in the presence of a platinum catalyst to synthesize a surfactant S6. The surfactant S6 has the structure of a both-terminal-modified type silicone-based compound represented by the general formula (4). "d", "p", $R_6$ and $R_5$ in the general formula (4) correspond to "d", "p", $R_4$ and $R_5$ in the general formulae (C) and (D) representing the structures of the respective compounds used in the synthesis, respectively. "d" is 10, "p" is 5, $R_6$ represents a propylene group, $R_5$ represents a methyl group and $R_4$ represents a propyl group.

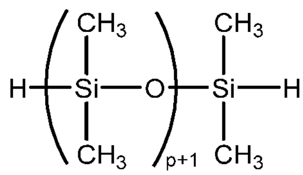 (C)

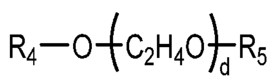 (D)

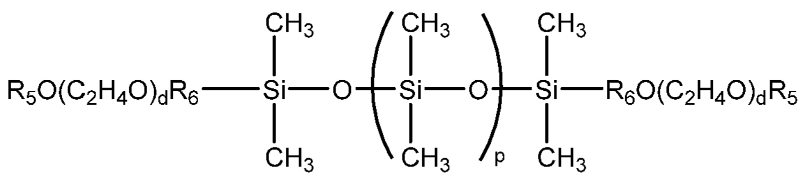 (4)

(Surfactant S7)

A polysiloxane compound represented by the following general formula (E) and a polyoxyethylene compound represented by the following general formula (F) were loaded into a glass-made vessel including a temperature gauge and a stirring unit. The compounds were subjected to an addition reaction in the presence of a platinum catalyst to synthesize a surfactant S7. The surfactant S7 has the structure of an ABn type silicone-based compound represented by the general formula (5). "e", "q", $R_7$ and $R_9$ in the general formula (5) correspond to "e", "q", $R_7$ and $R_8$ in the general formulae (E) and (F) representing the structures of the respective compounds used in the synthesis, respectively. "e" is 10, "q" is 5, "r" is 2, $R_7$ represents a methyl group, $R_9$ represents a propylene group and $R_8$ represents a propyl group.

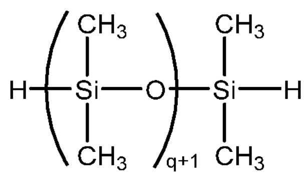 (E)

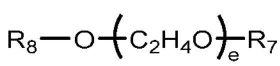 (F)

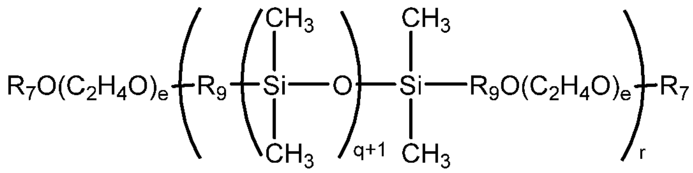

(5)

(Surfactant F1)

A product available under the product name "MEGAFACE F-410" (manufactured by DIC Corporation), which was a fluorine-based surfactant, was prepared and adopted as a surfactant F1.

(Surfactants C1 to C7)

Surfactants C1 to C6, which were acetylene glycol compounds, and a surfactant C7, which was a polyoxyethylene alkyl ether, were prepared. The surfactants C1 to C3 and C5 are each an acetylene glycol compound represented by the general formula (2).

·Surfactant C1: product name: "ACETYLENOL E60" (in the general formula (2), b+c=6, manufactured by Kawaken Fine Chemicals Co., Ltd.)
·Surfactant C2: product name: "ACETYLENOL E40" (in the general formula (2), b+c=4, manufactured by Kawaken Fine Chemicals Co., Ltd.)
·Surfactant C3: product name: "ACETYLENOL E100" (in the general formula (2), b+c=10, manufactured by Kawaken Fine Chemicals Co., Ltd.)
·Surfactant C4: product name: "SURFYNOL 104" (in the general formula (2), b=c=0, manufactured by Nissin Chemical Industry Co., Ltd.)
·Surfactant C5: product name: "OLFINE E1010" (in the general formula (2), b+c=10, manufactured by Nissin Chemical Industry Co., Ltd.)
·Surfactant C6: ethoxylated form of 2,4,7,9-tetramethyl-5-decyne-4,7-diol (in the general formula (2), b+c=50)
·Surfactant C7: product name: "NIKKOL BC-20" (polyoxyethylene cetyl ether, manufactured by Nikko Chemicals Co., Ltd.)

<Preparation of Compound>

Siloxane compounds were synthesized by an ordinary method to provide compounds 1 to 6 each represented by the general formula (3), and in which "o" in the general formula (3) each represented a number shown in Table 4 below.

Table 4: Structure of compound

| Compound | "o" in general formula (3) |
|---|---|
| 1 | 5 |
| 2 | 0 |
| 3 | 1 |
| 4 | 10 |
| 5 | 11 |
| 6 | 8 |

<Preparation of Ink>

(Inks 1 to 67)

Respective components (unit: %) shown in the middle stage of each of Tables 5 (Tables 5-1 to 5-10) were mixed and sufficiently stirred. After that, the mixture was filtered with a microfilter having a pore size of 3.0 μm (manufactured by FUJIFILM Corporation) under pressure to prepare each of inks. Materials whose numbers were shown in the upper stage of each of Tables 5 were used as "Pigment dispersion liquid," "Liquid containing resin particle," "Aqueous solution of urethane resin", "Surfactant S", "Surfactant C" and "Compound" shown in the middle stage of each of Tables 5,

respectively. However, the symbol "-" in the upper stages of Tables 5 means that the corresponding material was not used. Numerical values in parentheses attached to water-soluble organic solvents in the middle stage of each of Tables 5 each represent a relative dielectric constant at 25°C. The usage amount of ion-exchanged water was set to such a balance that the total of the components became 100.00%. The content P (%) of the pigment in each of the inks, the content R (%) of the resin particle and the content C (%) of the particulate component are shown as the characteristics of the ink in the lower stage of each of Tables 5. Similarly, the content S (%) of the first surfactant (any one of the surfactants S1 to S5, S15 and S16) in each of the inks, the content A (%) of the second surfactant (any one of the surfactants C1 to C6) and the content T (%) of the surfactant (any one or two of the surfactants S1 to S16, F1 and C1 to C7) are shown. Similarly, the content D (%) of the compound (compound 1, 3, 4 or 6) represented by the general formula (3) in each of the inks, the value (times) of the ratio "S/A", the value (times) of the ratio "C/T" and the value (times) of the ratio "D/S" are shown.

Table 5-1: Compositions and characteristics of inks

| | Ink | | | | | | |
|---|---|---|---|---|---|---|---|
| | 1 | 2 | 3 | 4 | 5 | 6 | 7 |
| Number of pigment dispersion liquid | 1 | 2 | 3 | 4 | 5 | - | - |
| Number of resin particle | - | - | - | - | - | 1 | 2 |
| Number of urethane resin | 1 | 1 | 1 | 1 | 1 | 1 | 1 |
| Number of surfactant S | S1 | S1 | S1 | S1 | S1 | S1 | S1 |
| Number of surfactant C | C1 | C1 | C1 | C1 | C1 | C1 | C1 |
| Number of compound | 1 | 1 | 1 | 1 | 1 | 1 | 1 |
| Pigment dispersion liquid | 15.00 | 15.00 | 15.00 | 15.00 | 15.00 | | |
| C.I. Direct Black 195 | | | | | | | |
| Liquid containing resin particle | | | | | | 10.00 | 10.00 |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | 0.005 | 0.005 | 0.005 | 0.005 | 0.005 | 0.005 | 0.005 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 1.50 | 1.50 | 1.50 | 1.50 | 0.00 | 0.00 |
| Content R (%) of resin particle | 0.00 | 0.00 | 0.00 | 0.00 | 0.00 | 1.00 | 1.00 |

(continued)

| | Ink | | | | | | |
|---|---|---|---|---|---|---|---|
| | 1 | 2 | 3 | 4 | 5 | 6 | 7 |
| Content C (%) of particulate component | 1.50 | 1.50 | 1.50 | 1.50 | 1.50 | 1.00 | 1.00 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 1.00 | 1.00 |
| Content T (%) of surfactant | 2.00 | 2.00 | 2.00 | 2.00 | 2.00 | 2.00 | 2.00 |
| Content D (%) of compound represented by general formula (3) | 0.005 | 0.005 | 0.005 | 0.005 | 0.005 | 0.005 | 0.005 |
| Value (times) of S/A | 1.00 | 1.00 | 1.00 | 1.00 | 1.00 | 1.00 | 1.00 |
| Value (times) of C/T | 0.75 | 0.75 | 0.75 | 0.75 | 0.75 | 0.50 | 0.50 |
| Value (times) of D/S | 0.005 | 0.005 | 0.005 | 0.005 | 0.005 | 0.005 | 0.005 |

Table 5-2: Compositions and characteristics of inks

| | Ink | | | | | | |
|---|---|---|---|---|---|---|---|
| | 8 | 9 | 10 | 11 | 12 | 13 | 14 |
| Number of pigment dispersion liquid | 1 | 1 | 1 | 1 | 1 | 1 | 1 |
| Number of resin particle | 1 | - | - | - | - | - | - |
| Number of urethane resin | 1 | 1 | 1 | 1 | 1 | 1 | 1 |
| Number of surfactant S | S1 | S2 | S3 | S4 | S5 | S1 | S1 |
| Number of surfactant C | C1 | C1 | C1 | C1 | C1 | C2 | C3 |
| Number of compound | 1 | 1 | 1 | 1 | 1 | 1 | 1 |
| Pigment dispersion liquid | 15.00 | 15.00 | 15.00 | 15.00 | 15.00 | 15.00 | 15.00 |
| C.I. Direct Black 195 | | | | | | | |
| Liquid containing resin particle | 10.00 | | | | | | |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | 0.005 | 0.005 | 0.005 | 0.005 | 0.005 | 0.005 | 0.005 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |

(continued)

| | Ink | | | | | | |
|---|---|---|---|---|---|---|---|
| | 8 | 9 | 10 | 11 | 12 | 13 | 14 |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 1.50 | 1.50 | 1.50 | 1.50 | 1.50 | 1.50 |
| Content R (%) of resin particle | 1.00 | 0.00 | 0.00 | 0.00 | 0.00 | 0.00 | 0.00 |
| Content C (%) of particulate component | 2.50 | 1.50 | 1.50 | 1.50 | 1.50 | 1.50 | 1.50 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 1.00 | 1.00 |
| Content T (%) of surfactant | 2.00 | 2.00 | 2.00 | 2.00 | 2.00 | 2.00 | 2.00 |
| Content D (%) of compound represented by general formula (3) | 0.005 | 0.005 | 0.005 | 0.005 | 0.005 | 0.005 | 0.005 |
| Value (times) of S/A | 1.00 | 1.00 | 1.00 | 1.00 | 1.00 | 1.00 | 1.00 |
| Value (times) of C/T | 1.25 | 0.75 | 0.75 | 0.75 | 0.75 | 0.75 | 0.75 |
| Value (times) of D/S | 0.005 | 0.005 | 0.005 | 0.005 | 0.005 | 0.005 | 0.005 |

Table 5-3: Compositions and characteristics of inks

| | Ink | | | | | | |
|---|---|---|---|---|---|---|---|
| | 15 | 16 | 17 | 18 | 19 | 20 | 21 |
| Number of pigment dispersion liquid | 1 | 1 | 1 | 1 | 1 | 1 | 1 |
| Number of resin particle | - | - | - | - | - | - | - |
| Number of urethane resin | 1 | 1 | 1 | 1 | 1 | 1 | 1 |
| Number of surfactant S | S1 | S1 | S1 | S1 | S1 | S1 | S1 |
| Number of surfactant C | C4 | C1 | C1 | C1 | C1 | C1 | C1 |
| Number of compound | 1 | 1 | 1 | 1 | 1 | 1 | 1 |
| Pigment dispersion liquid | 15.00 | 15.00 | 15.00 | 15.00 | 15.00 | 15.00 | 15.00 |
| C.I. Direct Black 195 | | | | | | | |
| Liquid containing resin particle | | | | | | | |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 0.10 | 0.10 | 1.00 | 1.00 | 1.00 | 1.00 |

(continued)

| | Ink | | | | | | |
|---|---|---|---|---|---|---|---|
| | 15 | 16 | 17 | 18 | 19 | 20 | 21 |
| Surfactant F1 | | | | | | | |
| Surfactant C | 1.00 | 2.50 | 2.00 | 0.50 | 0.48 | 1.00 | 1.00 |
| Compound | 0.005 | 0.0005 | 0.0005 | 0.005 | 0.005 | 0.005 | 0.005 |
| Glycerin (42.3) | 10.00 | 10.00 | 10.00 | 10.00 | 10.00 | | |
| Ethylene glycol (40.4) | | | | | | 10.00 | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 1.50 | 1.50 | 1.50 | 1.50 | 1.50 | 1.50 |
| Content R (%) of resin particle | 0.00 | 0.00 | 0.00 | 0.00 | 0.00 | 0.00 | 0.00 |
| Content C (%) of particulate component | 1.50 | 1.50 | 1.50 | 1.50 | 1.50 | 1.50 | 1.50 |
| Content S (%) of first surfactant | 1.00 | 0.10 | 0.10 | 1.00 | 1.00 | 1.00 | 1.00 |
| Content A (%) of second surfactant | 1.00 | 2.50 | 2.00 | 0.50 | 0.48 | 1.00 | 1.00 |
| Content T (%) of surfactant | 2.00 | 2.60 | 2.10 | 1.50 | 1.48 | 2.00 | 2.00 |
| Content D (%) of compound represented by general formula (3) | 0.005 | 0.0005 | 0.0005 | 0.005 | 0.005 | 0.005 | 0.005 |
| Value (times) of S/A | 1.00 | 0.04 | 0.05 | 2.00 | 2.10 | 1.00 | 1.00 |
| Value (times) of C/T | 0.75 | 0.58 | 0.71 | 1.00 | 1.02 | 0.75 | 0.75 |
| Value (times) of D/S | 0.005 | 0.005 | 0.005 | 0.005 | 0.005 | 0.005 | 0.005 |

Table 5-4: Compositions and characteristics of inks

| | Ink | | | | | | |
|---|---|---|---|---|---|---|---|
| | 22 | 23 | 24 | 25 | 26 | 27 | 28 |
| Number of pigment dispersion liquid | 1 | 1 | 1 | 1 | 1 | 1 | 1 |
| Number of resin particle | - | - | - | - | - | - | - |
| Number of urethane resin | 1 | 1 | 1 | 1 | 1 | 1 | 1 |
| Number of surfactant S | S1 | S1 | S1 | S1 | S1 | S1 | S1 |
| Number of surfactant C | C1 | C1 | C1 | C1 | C1 | C1 | C1 |
| Number of compound | 1 | 1 | 1 | 1 | 1 | 1 | 1 |
| Pigment dispersion liquid | 15.00 | 15.00 | 15.00 | 15.00 | 15.00 | 15.00 | 15.00 |

(continued)

| | Ink | | | | | | |
|---|---|---|---|---|---|---|---|
| | 22 | 23 | 24 | 25 | 26 | 27 | 28 |
| C.I. Direct Black 195 | | | | | | | |
| Liquid containing resin particle | | | | | | | |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | 0.005 | 0.005 | 0.005 | 0.005 | 0.005 | 0.005 | 0.005 |
| Glycerin (42.3) | 10.00 | 10.00 | 10.00 | 10.00 | 10.00 | | 10.00 |
| Ethylene glycol (40.4) | | | | | | | |
| 1,6-Hexanediol (7.1) | | | | | | | 5.00 |
| 1,5-Pentanediol (27.0) | 5.00 | | | | | | |
| 3-Methyl-1,5-pentanediol (23.9) | | 5.00 | | | | | |
| 1,4-Butanediol (31.1) | | | | 5.00 | | | |
| 1,2-Hexanediol (14.8) | | | | | 5.00 | | |
| Diethylene glycol (31.7) | | | | | | 5.00 | 5.00 |
| Ion-exchanged water | Balance | Balance | Balance | Balance | Balance | Balance | Balance |
| Content P (%) of pigment | 1.50 | 1.50 | 1.50 | 1.50 | 1.50 | 1.50 | 1.50 |
| Content R (%) of resin particle | 0.00 | 0.00 | 0.00 | 0.00 | 0.00 | 0.00 | 0.00 |
| Content C (%) of particulate component | 1.50 | 1.50 | 1.50 | 1.50 | 1.50 | 1.50 | 1.50 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 1.00 | 1.00 |
| Content T (%) of surfactant | 2.00 | 2.00 | 2.00 | 2.00 | 2.00 | 2.00 | 2.00 |
| Content D (%) of compound represented by general formula (3) | 0.005 | 0.005 | 0.005 | 0.005 | 0.005 | 0.005 | 0.005 |
| Value (times) of S/A | 1.00 | 1.00 | 1.00 | 1.00 | 1.00 | 1.00 | 1.00 |
| Value (times) of C/T | 0.75 | 0.75 | 0.75 | 0.75 | 0.75 | 0.75 | 0.75 |
| Value (times) of D/S | 0.005 | 0.005 | 0.005 | 0.005 | 0.005 | 0.005 | 0.005 |

Table 5-5: Compositions and characteristics of inks

| | Ink | | | | | | |
|---|---|---|---|---|---|---|---|
| | 29 | 30 | 31 | 32 | 33 | 34 | 35 |
| Number of pigment dispersion liquid | 1 | 1 | 1 | 1 | 1 | 1 | 1 |
| Number of resin particle | - | - | - | - | - | - | - |
| Number of urethane resin | 1 | 1 | 1 | 1 | 1 | 1 | 1 |
| Number of surfactant S | S1 | S1 | S1 | S1 | S1 | S1 | S1 |
| Number of surfactant C | C1 | C1 | C1 | C1 | C1 | C1 | C1 |
| Number of compound | - | 2 | 3 | 4 | 5 | 1 | 1 |
| Pigment dispersion liquid | 15.00 | 15.00 | 15.00 | 15.00 | 15.00 | 15.00 | 15.00 |
| C.I. Direct Black 195 | | | | | | | |
| Liquid containing resin particle | | | | | | | |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | | 0.005 | 0.005 | 0.005 | 0.005 | 0.0005 | 0.010 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 1.50 | 1.50 | 1.50 | 1.50 | 1.50 | 1.50 |
| Content R (%) of resin particle | 0.00 | 0.00 | 0.00 | 0.00 | 0.00 | 0.00 | 0.00 |
| Content C (%) of particulate component | 1.50 | 1.50 | 1.50 | 1.50 | 1.50 | 1.50 | 1.50 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 1.00 | 1.00 |
| Content T (%) of surfactant | 2.00 | 2.00 | 2.00 | 2.00 | 2.00 | 2.00 | 2.00 |

(continued)

| | Ink | | | | | | |
|---|---|---|---|---|---|---|---|
| | 29 | 30 | 31 | 32 | 33 | 34 | 35 |
| Content D (%) of compound represented by general formula (3) | 0.000 | 0.000 | 0.005 | 0.005 | 0.000 | 0.0005 | 0.010 |
| Value (times) of S/A | 1.00 | 1.00 | 1.00 | 1.00 | 1.00 | 1.00 | 1.00 |
| Value (times) of C/T | 0.75 | 0.75 | 0.75 | 0.75 | 0.75 | 0.75 | 0.75 |
| Value (times) of D/S | 0.000 | 0.000 | 0.005 | 0.005 | 0.000 | 0.0005 | 0.010 |

Table 5-6: Compositions and characteristics of inks

| | Ink | | | | | | |
|---|---|---|---|---|---|---|---|
| | 36 | 37 | 38 | 39 | 40 | 41 | 42 |
| Number of pigment dispersion liquid | 1 | - | - | - | - | 1 | 1 |
| Number of resin particle | - | 3 | 4 | 5 | 6 | - | - |
| Number of urethane resin | 1 | 1 | 1 | 1 | 1 | - | 2 |
| Number of surfactant S | S1 | S1 | S1 | S1 | S1 | S1 | S1 |
| Number of surfactant C | C1 | C1 | C1 | C1 | C1 | C1 | C1 |
| Number of compound | 1 | 1 | 1 | 1 | 1 | 1 | 1 |
| Pigment dispersion liquid | 15.00 | | | | | 15.00 | 15.00 |
| C.I. Direct Black 195 | | | | | | | |
| Liquid containing resin particle | | 10.00 | 10.00 | 10.00 | 10.00 | | |
| Aqueous solution of urethane resin | 5.00 | 5.00 | 5.00 | 5.00 | 5.00 | | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | 0.020 | 0.005 | 0.005 | 0.005 | 0.005 | 0.005 | 0.005 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 0.00 | 0.00 | 0.00 | 0.00 | 1.50 | 1.50 |

(continued)

| | Ink | | | | | | |
|---|---|---|---|---|---|---|---|
| | 36 | 37 | 38 | 39 | 40 | 41 | 42 |
| Content R (%) of resin particle | 0.00 | 1.00 | 1.00 | 1.00 | 1.00 | 0.00 | 0.00 |
| Content C (%) of particulate component | 1.50 | 1.00 | 1.00 | 1.00 | 1.00 | 1.50 | 1.50 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 1.00 | 1.00 |
| Content T (%) of surfactant | 2.00 | 2.00 | 2.00 | 2.00 | 2.00 | 2.00 | 2.00 |
| Content D (%) of compound represented by general formula (3) | 0.020 | 0.005 | 0.005 | 0.005 | 0.005 | 0.005 | 0.005 |
| Value (times) of S/A | 1.00 | 1.00 | 1.00 | 1.00 | 1.00 | 1.00 | 1.00 |
| Value (times) of C/T | 0.75 | 0.50 | 0.50 | 0.50 | 0.50 | 0.75 | 0.75 |
| Value (times) of D/S | 0.020 | 0.005 | 0.005 | 0.005 | 0.005 | 0.005 | 0.005 |

Table 5-7: Compositions and characteristics of inks

| | Ink | | | | | | |
|---|---|---|---|---|---|---|---|
| | 43 | 44 | 45 | 46 | 47 | 48 | 49 |
| Number of pigment dispersion liquid | 1 | 1 | 1 | 1 | 1 | - | - |
| Number of resin particle | - | - | - | - | - | 6 | - |
| Number of urethane resin | 3 | 4 | 5 | 6 | 7 | - | 1 |
| Number of surfactant S | S1 | S1 | S1 | S1 | S1 | S1 | S1 |
| Number of surfactant C | C1 | C1 | C1 | C1 | C1 | C1 | C1 |
| Number of compound | 1 | 1 | 1 | 1 | 1 | 5 | 1 |
| Pigment dispersion liquid | 15.00 | 15.00 | 15.00 | 15.00 | 15.00 | | |
| C.I. Direct Black 195 | | | | | | | |
| Liquid containing resin particle | | | | | | 10.00 | |
| Aqueous solution of urethane resin | 5.00 | 5.00 | 5.00 | 5.00 | 5.00 | | 5.00 |
| Aqueous solution of acrylic resin 1 | | | | | | | |
| Surfactant S | 1.00 | 1.00 | 1.00 | 1.00 | 1.00 | 1.00 | 1.00 |
| Surfactant F1 | | | | | | | |
| Surfactant C | 1.00 | 1.00 | 1.00 | 1.00 | 1.00 | 0.40 | 1.00 |
| Compound | 0.005 | 0.005 | 0.005 | 0.005 | 0.005 | 0.020 | 0.005 |
| Glycerin (42.3) | 10.00 | 10.00 | 10.00 | 10.00 | 10.00 | | 10.00 |
| Ethylene glycol (40.4) | | | | | | | |
| 1,6-Hexanediol (7.1) | 5.00 | 5.00 | 5.00 | 5.00 | 5.00 | | 5.00 |

(continued)

| | Ink | | | | | | |
|---|---|---|---|---|---|---|---|
| | 43 | 44 | 45 | 46 | 47 | 48 | 49 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | 5.00 | |
| Ion-exchanged water | Balance | Balance | Balance | Balance | Balance | Balance | Balance |
| Content P (%) of pigment | 1.50 | 1.50 | 1.50 | 1.50 | 1.50 | 0.00 | 0.00 |
| Content R (%) of resin particle | 0.00 | 0.00 | 0.00 | 0.00 | 0.00 | 1.00 | 0.00 |
| Content C (%) of particulate component | 1.50 | 1.50 | 1.50 | 1.50 | 1.50 | 1.00 | 0.00 |
| Content S (%) of first surfactant | 1.00 | 1.00 | 1.00 | 1.00 | 1.00 | 1.00 | 1.00 |
| Content A (%) of second surfactant | 1.00 | 1.00 | 1.00 | 1.00 | 1.00 | 0.40 | 1.00 |
| Content T (%) of surfactant | 2.00 | 2.00 | 2.00 | 2.00 | 2.00 | 1.40 | 2.00 |
| Content D (%) of compound represented by general formula (3) | 0.005 | 0.005 | 0.005 | 0.005 | 0.005 | 0.000 | 0.005 |
| Value (times) of S/A | 1.00 | 1.00 | 1.00 | 1.00 | 1.00 | 2.50 | 1.00 |
| Value (times) of C/T | 0.75 | 0.75 | 0.75 | 0.75 | 0.75 | 0.71 | 0.00 |
| Value (times) of D/S | 0.005 | 0.005 | 0.005 | 0.005 | 0.005 | 0.000 | 0.005 |

Table 5-8: Compositions and characteristics of inks

| | Ink | | | | | | |
|---|---|---|---|---|---|---|---|
| | 50 | 51 | 52 | 53 | 54 | 55 | 56 |
| Number of pigment dispersion liquid | - | - | 1 | 1 | 1 | 1 | 1 |
| Number of resin particle | - | - | - | - | - | - | - |
| Number of urethane resin | 1 | 1 | 1 | 1 | 1 | 1 | 1 |
| Number of surfactant S | S1 | S1 | - | S6 | S7 | S8 | S9 |
| Number of surfactant C | C1 | C1 | C1 | C1 | C1 | C1 | C1 |
| Number of compound | 1 | 1 | 1 | 1 | 1 | 1 | 1 |
| Pigment dispersion liquid | | | 15.00 | 15.00 | 15.00 | 15.00 | 15.00 |
| C.I. Direct Black 195 | 5.00 | | | | | | |
| Liquid containing resin particle | | | | | | | |
| Aqueous solution of urethane resin | 5.00 | 5.00 | 5.00 | 5.00 | 5.00 | 5.00 | 5.00 |
| Aqueous solution of acrylic resin 1 | | 10.00 | | | | | |

(continued)

| | Ink | | | | | | |
|---|---|---|---|---|---|---|---|
| | 50 | 51 | 52 | 53 | 54 | 55 | 56 |
| Surfactant S | 1.00 | 1.00 | | 1.00 | 1.00 | 1.00 | 1.00 |
| Surfactant F1 | | | | | | | |
| Surfactant C | 1.00 | 1.00 | 1.00 | 1.00 | 1.00 | 1.00 | 1.00 |
| Compound | 0.005 | 0.005 | 0.005 | 0.005 | 0.005 | 0.005 | 0.005 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 0.00 | 0.00 | 1.50 | 1.50 | 1.50 | 1.50 | 1.50 |
| Content R (%) of resin particle | 0.00 | 0.00 | 0.00 | 0.00 | 0.00 | 0.00 | 0.00 |
| Content C (%) of particulate component | 0.00 | 0.00 | 1.50 | 1.50 | 1.50 | 1.50 | 1.50 |
| Content S (%) of first surfactant | 1.00 | 1.00 | 0.00 | 0.00 | 0.00 | 0.00 | 0.00 |
| Content A (%) of second surfactant | 1.00 | 1.00 | 1.00 | 1.00 | 1.00 | 1.00 | 1.00 |
| Content T (%) of surfactant | 2.00 | 2.00 | 1.00 | 2.00 | 2.00 | 2.00 | 2.00 |
| Content D (%) of compound represented by general formula (3) | 0.005 | 0.005 | 0.005 | 0.005 | 0.005 | 0.005 | 0.005 |
| Value (times) of S/A | 1.00 | 1.00 | 0.00 | 0.00 | 0.00 | 0.00 | 0.00 |
| Value (times) of C/T | 0.00 | 0.00 | 1.50 | 0.75 | 0.75 | 0.75 | 0.75 |
| Value (times) of D/S | 0.005 | 0.005 | - | - | - | - | - |

Table 5-9: Compositions and characteristics of inks

| | Ink | | | | | | |
|---|---|---|---|---|---|---|---|
| | 57 | 58 | 59 | 60 | 61 | 62 | 63 |
| Number of pigment dispersion liquid | 1 | 1 | 1 | 1 | 1 | 1 | 1 |
| Number of resin particle | - | - | - | - | - | - | - |
| Number of urethane resin | 1 | 1 | 1 | 1 | 1 | 1 | 1 |
| Number of surfactant S | S10 | S11 | S12 | S13 | S14 | - | S1 |
| Number of surfactant C | C1 | C1 | C1 | C1 | C1 | C1 | - |
| Number of compound | 1 | 1 | 1 | 1 | 1 | 1 | 1 |

(continued)

| | Ink | | | | | | |
|---|---|---|---|---|---|---|---|
| | 57 | 58 | 59 | 60 | 61 | 62 | 63 |
| Pigment dispersion liquid | 15.00 | 15.00 | 15.00 | 15.00 | 15.00 | 15.00 | 15.00 |
| C.I. Direct Black 195 | | | | | | | |
| Liquid containing resin particle | | | | | | | |
| Aqueous solution of urethane resin | 5.00 | 5.00 | 5.00 | 5.00 | 5.00 | 5.00 | 5.00 |
| Aqueous solution of acrylic resin 1 | | | | | | | |
| Surfactant S | 1.00 | 1.00 | 1.00 | 1.00 | 1.00 | | 1.00 |
| Surfactant F1 | | | | | | 1.00 | |
| Surfactant C | 1.00 | 1.00 | 1.00 | 1.00 | 1.00 | 1.00 | |
| Compound | 0.005 | 0.005 | 0.005 | 0.005 | 0.005 | 0.005 | 0.005 |
| Glycerin (42.3) | 10.00 | 10.00 | 10.00 | 10.00 | 10.00 | 10.00 | 10.00 |
| Ethylene glycol (40.4) | | | | | | | |
| 1,6-Hexanediol (7.1) | 5.00 | 5.00 | 5.00 | 5.00 | 5.00 | 5.00 | 5.00 |
| 1,5-Pentanediol (27.0) | | | | | | | |
| 3-Methyl-1,5-pentanediol (23.9) | | | | | | | |
| 1,4-Butanediol (31.1) | | | | | | | |
| 1,2-Hexanediol (14.8) | | | | | | | |
| Diethylene glycol (31.7) | | | | | | | |
| Ion-exchanged water | Balance | Balance | Balance | Balance | Balance | Balance | Balance |
| Content P (%) of pigment | 1.50 | 1.50 | 1.50 | 1.50 | 1.50 | 1.50 | 1.50 |
| Content R (%) of resin particle | 0.00 | 0.00 | 0.00 | 0.00 | 0.00 | 0.00 | 0.00 |
| Content C (%) of particulate component | 1.50 | 1.50 | 1.50 | 1.50 | 1.50 | 1.50 | 1.50 |
| Content S (%) of first surfactant | 0.00 | 0.00 | 0.00 | 0.00 | 0.00 | 0.00 | 1.00 |
| Content A (%) of second surfactant | 1.00 | 1.00 | 1.00 | 1.00 | 1.00 | 1.00 | 0.00 |
| Content T (%) of surfactant | 2.00 | 2.00 | 2.00 | 2.00 | 2.00 | 2.00 | 1.00 |
| Content D (%) of compound represented by general formula (3) | 0.005 | 0.005 | 0.005 | 0.005 | 0.005 | 0.005 | 0.005 |
| Value (times) of S/A | 0.00 | 0.00 | 0.00 | 0.00 | 0.00 | 0.00 | - |
| Value (times) of C/T | 0.75 | 0.75 | 0.75 | 0.75 | 0.75 | 0.75 | 1.50 |
| Value (times) of D/S | - | - | - | - | - | - | 0.005 |

Table 5-10: Compositions and characteristics of inks

| | Ink | | | |
|---|---|---|---|---|
| | 64 | 65 | 66 | 67 |
| Number of pigment dispersion liquid | 1 | 1 | 1 | 1 |
| Number of resin particle | - | - | - | - |
| Number of urethane resin | 1 | 1 | 1 | 1 |
| Number of surfactant S | S1 | S6 | S7 | S11 |
| Number of surfactant C | C7 | - | - | - |
| Number of compound | 1 | 1 | 1 | 1 |
| Pigment dispersion liquid | 15.00 | 15.00 | 15.00 | 15.00 |
| C.I. Direct Black 195 | | | | |
| Liquid containing resin particle | | | | |
| Aqueous solution of urethane resin | 5.00 | 5.00 | 5.00 | 5.00 |
| Aqueous solution of acrylic resin 1 | | | | |
| Surfactant S | 1.00 | 1.00 | 1.00 | 1.00 |
| Surfactant F1 | | | | |
| Surfactant C | 1.00 | | | |
| Compound | 0.005 | 0.005 | 0.005 | 0.005 |
| Glycerin (42.3) | 10.00 | 10.00 | 10.00 | 10.00 |
| Ethylene glycol (40.4) | | | | |
| 1,6-Hexanediol (7.1) | 5.00 | 5.00 | 5.00 | 5.00 |
| 1,5-Pentanediol (27.0) | | | | |
| 3-Methyl-1,5-pentanediol (23.9) | | | | |
| 1,4-Butanediol (31.1) | | | | |
| 1,2-Hexanediol (14.8) | | | | |
| Diethylene glycol (31.7) | | | | |
| Ion-exchanged water | Balance | Balance | Balance | Balance |
| Content P (%) of pigment | 1.50 | 1.50 | 1.50 | 1.50 |
| Content R (%) of resin particle | 0.00 | 0.00 | 0.00 | 0.00 |
| Content C (%) of particulate component | 1.50 | 1.50 | 1.50 | 1.50 |
| Content S (%) of first surfactant | 1.00 | 0.00 | 0.00 | 0.00 |
| Content A (%) of second surfactant | 0.00 | 0.00 | 0.00 | 0.00 |
| Content T (%) of surfactant | 2.00 | 1.00 | 1.00 | 1.00 |
| Content D (%) of compound represented by general formula (3) | 0.005 | 0.005 | 0.005 | 0.005 |
| Value (times) of S/A | - | - | - | - |
| Value (times) of C/T | 0.75 | 1.50 | 1.50 | 1.50 |
| Value (times) of D/S | 0.005 | - | - | - |

(Ink 68)

The following respective components were mixed and sufficiently stirred, followed by filtration with a microfilter having a pore size of 3.0 μm (manufactured by FUJIFILM Corporation) under pressure. Thus, an ink 68 that was an ink free of the second surfactant was prepared.

·Pigment dispersion liquid 1: 15.00%
·Aqueous solution of acrylic resin 2: 32.00%
·Dipropylene glycol: 3.00%
·1,2-Hexanediol: 0.50%
·1,2-Octanediol: 1.00%
·Surfactant S1: 0.10%
·Ion-exchanged water: 48.40%

(Ink 69)

The following respective components were mixed and sufficiently stirred, followed by filtration with a microfilter having a pore size of 3.0 μm (manufactured by FUJIFILM Corporation) under pressure. Thus, an ink 69 that was an ink free of the second surfactant was prepared.

·Pigment dispersion liquid 1: 15.00%
·Liquid containing resin particle 7: 8.75%
·3-Ethyl-3-hydroxymethyloxetane: 30.00%
·Propylene glycol monomethyl ether: 10.00%
·2-Ethyl-1,3-hexanediol: 2.00%
·2,4,7,9-Tetramethyldecane-4,7-diol: 0.50%
·2-Amino-2-ethyl-1,3-propanediol: 0.20%
·Surfactant S15: 2.00%
·Ion-exchanged water: 31.55%

(Ink 70)

The following respective components were mixed and sufficiently stirred, followed by filtration with a microfilter having a pore size of 3.0 μm (manufactured by FUJIFILM Corporation) under pressure. Thus, an ink 70 that was an ink free of the first surfactant was prepared.

·Pigment dispersion liquid 1: 15.00%
·Glycerin: 10.00%
·Ethylene glycol: 20.00%
·Triethylene glycol monobutyl ether: 15.00%
·Surfactant C5: 0.60%
·Ion-exchanged water: 39.40%

(Ink 71)

The following respective components were mixed and sufficiently stirred, followed by filtration with a microfilter having a pore size of 3.0 μm (manufactured by FUJIFILM Corporation) under pressure. Thus, an ink 71 that was an ink free of the second surfactant was prepared. KF-353A is a side chain type silicone oil (product name, manufactured by Shin-Etsu Chemical Co., Ltd.).

·Pigment dispersion liquid 1: 15.00%
·Glycerin: 20.00%
·1,2-Hexanediol: 10.00%
·Triethanolamine: 0.90%
·KF-353A: 0.10%
·Ion-exchanged water: 54.00%

(Ink 72)

The following respective components were mixed and sufficiently stirred, followed by filtration with a microfilter having a pore size of 3.0 μm (manufactured by FUJIFILM Corporation) under pressure. Thus, an ink 72 that was an ink free of the particulate component was prepared.

·Cibafix Direct Black 19 (manufactured by Ciba-Geigy Japan Ltd.): 5.00%

·Glycerin: 15.00%
·Propylene glycol: 0.05%
·Polyethylene glycol (number-average molecular weight 200): 10.00%
·Surfactant S16: 0.40%
·Surfactant C6: 0.50%
·Compound 6: 0.0025%
·Ion-exchanged water: 69.0475%

<Evaluation>

The following respective evaluations were performed by using the respective prepared inks. The evaluation results are shown in Table 6.

(Storage Stability)

The surface tension (static surface tension) of each of the inks obtained in the foregoing was measured. The surface tension of the ink was measured under the condition of 25°C with a Wilhelmy-type surface tensiometer (product name: "Automatic Surface Tensiometer CBVP-Z", manufactured by Kyowa Interface Science Co., Ltd.). Each of the inks was loaded into a closed vessel and was stored in an oven at 70°C for 1 week. A value obtained by subtracting the value of the surface tension of the ink before the storage from the value of the surface tension of the ink after the storage was calculated and the storage stability of the ink was evaluated in accordance with the following evaluation criteria.

A: The difference between the surface tensions was 1.0 mN/m or less.
B: The difference between the surface tensions was more than 1.0 mN/m to 2.0 mN/m or less.
C: The difference between the surface tensions was more than 2.0 mN/m.

(Suppression of Occurrence of Mist)

Each of the above-mentioned respective prepared inks was loaded into an ink cartridge and set in an ink jet recording apparatus that ejected the ink from a recording head through the action of thermal energy (product name: "TM-300", manufactured by Canon Inc.; described as "Thermal" in the item "Ejection system" in Table 6). In Examples of the present invention, the recording duty of a solid image recorded under the following condition is defined as 100%: four ink droplets each having a mass per droplet of 4.0 ng±5% are applied to a unit region measuring 1/600 inch by 1/600 inch. In each of Reference Examples 1 and 2, an ink jet recording apparatus that ejected an ink from a recording head using a piezo element (product name: "SC-T5255", manufactured by Seiko Epson Corporation; described as "Piezo" in the item "Ejection system" in Table 6) was used. A solid image measuring 36 inches by 48 inches, the image having a recording duty of 30%, was recorded on heavyweight coated paper (product name: "Heavyweight Coated Paper HG", manufactured by Canon Inc.) with each of the above-mentioned ink jet recording apparatus, followed by the evaluation of a suppressing effect on the occurrence of the mist in accordance with the following evaluation criteria. When continuous recording is continued under a state in which mist occurs, a sensor in the apparatus detects an error to stop the recording. Accordingly, a larger number of recorded sheets on which the recording can be normally performed means a higher suppressing effect on the occurrence of the mist.

AA: The recording was able to be normally performed even when the number of the recorded sheets was more than 50,000 sheets.
A: The recording was stopped during the time period for which the number of the recorded sheets was 40,000 sheets or more to less than 50,000 sheets.
B: The recording was stopped during the time period for which the number of the recorded sheets was 30,000 sheets or more to less than 40,000 sheets.
C: The recording was stopped when the number of the recorded sheets was less than 30,000 sheets.

Table 6: Evaluation conditions and evaluation results

| | | Evaluation condition | | Evaluation result | |
|---|---|---|---|---|---|
| | | Ink | Ejection system | Storage stability | Mist suppression |
| Example | 1 | 1 | Thermal | A | AA |
| | 2 | 2 | Thermal | A | AA |
| | 3 | 3 | Thermal | A | AA |
| | 4 | 4 | Thermal | A | AA |
| | 5 | 5 | Thermal | A | AA |
| | 6 | 6 | Thermal | A | AA |
| | 7 | 7 | Thermal | A | AA |
| | 8 | 8 | Thermal | A | AA |
| | 9 | 9 | Thermal | A | AA |
| | 10 | 10 | Thermal | A | AA |
| | 11 | 11 | Thermal | A | AA |
| | 12 | 12 | Thermal | A | AA |
| | 13 | 13 | Thermal | A | AA |
| | 14 | 14 | Thermal | A | AA |
| | 15 | 15 | Thermal | A | A |
| | 16 | 16 | Thermal | A | A |
| | 17 | 17 | Thermal | A | AA |
| | 18 | 18 | Thermal | A | AA |
| | 19 | 19 | Thermal | B | A |
| | 20 | 20 | Thermal | A | AA |
| | 21 | 21 | Thermal | A | A |
| | 22 | 22 | Thermal | A | AA |
| | 23 | 23 | Thermal | A | AA |
| | 24 | 24 | Thermal | A | A |
| | 25 | 25 | Thermal | A | A |
| | 26 | 26 | Thermal | A | A |
| | 27 | 27 | Thermal | A | A |
| | 28 | 28 | Thermal | A | AA |
| | 29 | 29 | Thermal | B | AA |
| | 30 | 30 | Thermal | B | AA |
| | 31 | 31 | Thermal | A | AA |
| | 32 | 32 | Thermal | A | AA |
| | 33 | 33 | Thermal | A | A |
| | 34 | 34 | Thermal | A | AA |
| | 35 | 35 | Thermal | A | AA |
| | 36 | 36 | Thermal | A | A |
| | 37 | 37 | Thermal | A | A |

(continued)

| | | Evaluation condition | | Evaluation result | |
|---|---|---|---|---|---|
| | | Ink | Ejection system | Storage stability | Mist suppression |
| Example | 38 | 38 | Thermal | A | A |
| | 39 | 39 | Thermal | B | AA |
| | 40 | 40 | Thermal | A | A |
| | 41 | 41 | Thermal | B | AA |
| | 42 | 42 | Thermal | A | AA |
| | 43 | 43 | Thermal | A | AA |
| | 44 | 44 | Thermal | A | AA |
| | 45 | 45 | Thermal | A | AA |
| | 46 | 46 | Thermal | B | AA |
| | 47 | 47 | Thermal | A | AA |
| | 48 | 48 | Thermal | B | B |
| Comparative Example | 1 | 49 | Thermal | c | C |
| | 2 | 50 | Thermal | c | c |
| | 3 | 51 | Thermal | c | c |
| | 4 | 52 | Thermal | A | c |
| | 5 | 53 | Thermal | A | C |
| | 6 | 54 | Thermal | A | c |
| | 7 | 55 | Thermal | c | C |
| | 8 | 56 | Thermal | c | c |
| | 9 | 57 | Thermal | c | c |
| | 10 | 58 | Thermal | c | c |
| | 11 | 59 | Thermal | C | c |
| | 12 | 60 | Thermal | c | c |
| | 13 | 61 | Thermal | c | C |
| | 14 | 62 | Thermal | A | c |
| | 15 | 63 | Thermal | c | c |
| | 16 | 64 | Thermal | C | c |
| | 17 | 65 | Thermal | A | c |
| | 18 | 66 | Thermal | A | C |
| | 19 | 67 | Thermal | c | AA |
| | 20 | 68 | Thermal | C | c |
| | 21 | 69 | Thermal | c | C |
| | 22 | 70 | Thermal | c | c |
| | 23 | 71 | Thermal | C | c |
| | 24 | 72 | Thermal | c | C |
| Reference Example | 1 | 1 | Piezo | A | AA |
| | 2 | 58 | Piezo | c | AA |

According to the present invention, the aqueous ink that is suppressed from causing mist and is excellent in

storage stability can be provided. In addition, according to the present invention, the ink cartridge and the ink jet recording method each using the aqueous ink can be provided.

While the present invention has been described with reference to exemplary embodiments, it is to be understood that the invention is not limited to the disclosed exemplary embodiments.

## Claims

1. An aqueous ink to be ejected from a recording head of an inkjet system through an action of thermal energy, the aqueous ink comprising:

   a particulate component;
   a first surfactant; and
   a second surfactant,
   wherein the particulate component comprises at least one kind selected from the group consisting of: a pigment and a resin particle,
   wherein the first surfactant comprises a compound represented by a following general formula (1), and
   wherein the second surfactant comprises an acetylene glycol compound:

   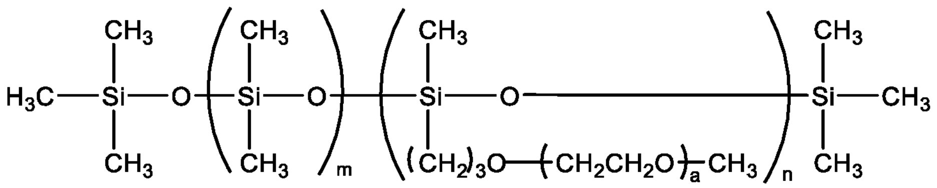
   (1)

   in the general formula (1), "m" and "n" each independently represent an integer of 1 or more and satisfy a relationship of m+n≤10, and "a" represents an integer of 10 or more to 20 or less.

2. The aqueous ink according to claim 1, wherein, in the aqueous ink, a mass ratio of a content (% by mass) of the first surfactant to a content (% by mass) of the second surfactant is 0.05 times or more to 3.00 times or less.

3. The aqueous ink according to claim 1, wherein, in the aqueous ink, a mass ratio of a content (% by mass) of the first surfactant to a content (% by mass) of the second surfactant is 0.05 times or more to 2.00 times or less.

4. The aqueous ink according to any one of claims 1 to 3,
   wherein the aqueous ink further comprises:

   a first water-soluble organic solvent having a relative dielectric constant of 28.0 or less; and
   a second water-soluble organic solvent having a relative dielectric constant of 40.0 or more, and
   wherein the first water-soluble organic solvent is an alkanediol having hydroxy groups at both terminals of a hydrocarbon chain thereof.

5. The aqueous ink according to any one of claims 1 to 4,

   wherein the aqueous ink further comprises a compound represented by a following general formula (3), and wherein, in the aqueous ink, a mass ratio of a content (% by mass) of the compound represented by the general formula (3) to a content (% by mass) of the first surfactant is 0.01 times or less:

   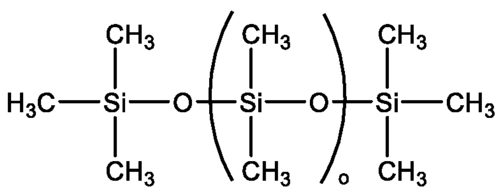
   (3)

   in the general formula (3), "o" represents an integer of 1 or more to 10 or less.

6. The aqueous ink according to any one of claims 1 to 5, wherein the particulate component comprises the pigment.

7. The aqueous ink according to any one of claims 1 to 6, wherein the particulate component comprises the resin particle, and
wherein the resin particle includes a core formed only of a unit having no acid group and a shell formed so as to include a unit having an acid group, and at least one of the unit for forming the core and the unit for forming the shell includes a unit derived from a (meth)acrylic acid ester.

8. The aqueous ink according to any one of claims 1 to 7,
wherein the aqueous ink further comprises a urethane resin, and
wherein the urethane resin has a unit derived from a polyisocyanate, a unit derived from a polyol having no acid group and a unit derived from a polyol having an acid group.

9. The aqueous ink according to claim 8, wherein in the urethane resin, a proportion of a unit derived from the polyol having an acid group present at a molecular terminal relative to the whole unit derived from the polyol having an acid group is 30 mol% or less.

10. The aqueous ink according to any one of claims 1 to 9, wherein a weight-average molecular weight of the compound represented by the general formula (1) is 800 or more to 2,000 or less.

11. The aqueous ink according to any one of claims 1 to 10, wherein the second surfactant comprises a compound represented by a following general formula (2),

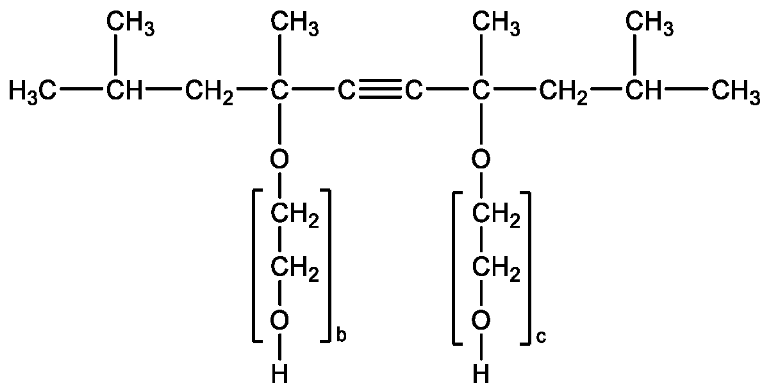

(2)

in the general formula (2), "b" and "c" each independently represent a positive integer.

12. The aqueous ink according to claim 11, wherein "b" and "c" in the general formula (2) each independently represent an integer of 1 or more to 50 or less.

13. The aqueous ink according to any one of claims 1 to 12, wherein a content (% by mass) of the particulate component in the aqueous ink is 0.10% by mass or more to 10.00% by mass or less with respect to the total mass of the ink.

14. The aqueous ink according to any one of claims 1 to 13, wherein a content (% by mass) of the first surfactant in the aqueous ink is 0.05% by mass or more to 4.00% by mass or less with respect to the total mass of the ink.

15. The aqueous ink according to any one of claims 1 to 14, wherein a content (% by mass) of the second surfactant in the aqueous ink is 0.10% by mass or more to 3.00% by mass or less with respect to the total mass of the ink.

16. The aqueous ink according to any one of claims 1 to 15, wherein, in the aqueous ink, a mass ratio of a content (% by mass) of the particulate component to a total content (% by mass) of the first surfactant and the second surfactant is 0.01 times or more to 10.00 times or less.

17. An ink cartridge comprising:

an ink; and

an ink storage portion configured to store the ink,
wherein the ink comprises the aqueous ink according to any one of claims 1 to 16.

**18.** An ink jet recording method comprising ejecting an ink from a recording head of an ink jet system through an action of thermal energy to record an image on a recording medium, wherein the ink comprises the aqueous ink according to any one of claims 1 to 16.

**19.** The ink jet recording method according to claim 18, wherein the recording medium has an ink permeability.

**Patentansprüche**

**1.** Wässrige Tinte, die durch Einwirkung von Wärmeenergie aus einem Aufzeichnungskopf eines Tintenstrahlsystems auszustoßen ist, wobei die wässrige Tinte umfasst:

eine Partikelkomponente;
ein erstes oberflächenaktives Mittel; und
ein zweites oberflächenaktives Mittel,
wobei die Partikelkomponente mindestens eines umfasst, das aus der aus einem Pigment und einem Harzpartikel bestehenden Gruppe ausgewählt ist,
wobei das erste oberflächenaktive Mittel eine Verbindung umfasst, die durch folgende allgemeine Formel (1) dargestellt ist, und
wobei das zweite oberflächenaktive Mittel eine Acetylenglycolverbindung umfasst:

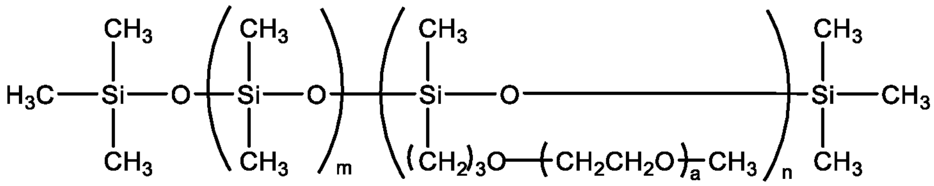
(1)

in der allgemeinen Formel (1) stellen "m" und "n" jeweils unabhängig voneinander eine ganze Zahl von 1 oder mehr dar und erfüllen eine Beziehung von m+n≤10, und "a" stellt eine ganze Zahl von 10 oder mehr bis 20 oder weniger dar.

**2.** Wässrige Tinte nach Anspruch 1, wobei in der wässrigen Tinte ein Massenverhältnis eines Gehalts (Massen-%) des ersten oberflächenaktiven Mittels zu einem Gehalt (Massen-%) des zweiten oberflächenaktiven Mittels das 0,05-fache oder mehr bis 3,00-fache oder weniger beträgt.

**3.** Wässrige Tinte nach Anspruch 1, wobei in der wässrigen Tinte ein Massenverhältnis eines Gehalts (Massen-%) des ersten oberflächenaktiven Mittels zu einem Gehalt (Massen-%) des zweiten oberflächenaktiven Mittels das 0,05-fache oder mehr bis 2,00-fache oder weniger beträgt.

**4.** Wässrige Tinte nach einem der Ansprüche 1 bis 3,
wobei die wässrige Tinte ferner umfasst:

ein erstes wasserlösliches organisches Lösungsmittel mit einer relativen Dielektrizitätskonstante von 28,0 oder weniger; und
ein zweites wasserlösliches organisches Lösungsmittel mit einer relativen Dielektrizitätskonstante von 40,0 oder mehr, und
wobei das erste wasserlösliche organische Lösungsmittel ein Alkandiol mit Hydroxygruppen an beiden Enden einer seiner Kohlenwasserstoffketten ist.

**5.** Wässrige Tinte nach einem der Ansprüche 1 bis 4,

wobei die wässrige Tinte ferner eine Verbindung umfasst, die durch die folgende allgemeine Formel (3) dargestellt ist, und
wobei in der wässrigen Tinte ein Massenverhältnis eines Gehalts (Massen-%) der durch die allgemeine Formel

(3) dargestellten Verbindung zu einem Gehalt (Massen-%) des ersten oberflächenaktiven Mittels das 0,01-fache oder weniger beträgt:

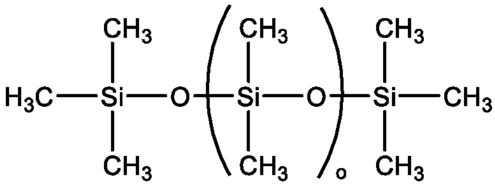 (3)

in der allgemeinen Formel (3) stellt "o" eine ganze Zahl von 1 oder mehr bis 10 oder weniger dar.

**6.** Wässrige Tinte nach einem der Ansprüche 1 bis 5, wobei die Partikelkomponente das Pigment umfasst.

**7.** Wässrige Tinte nach einem der Ansprüche 1 bis 6, wobei die Partikelkomponente das Harzpartikel umfasst, und wobei das Harzpartikel einen Kern, der nur aus einer Einheit ohne Säuregruppe gebildet ist, und eine Schale, die so gebildet ist, dass sie eine Einheit mit einer Säuregruppe umfasst, beinhaltet, und mindestens eine der Einheit zum Bilden des Kerns und der Einheit zum Bilden der Schale eine Einheit umfasst, die von einem (Meth)acrylsäureester abgeleitet ist.

**8.** Wässrige Tinte nach einem der Ansprüche 1 bis 7,
wobei die wässrige Tinte ferner ein Urethanharz umfasst, und
wobei das Urethanharz eine Einheit, die von einem Polyisocyanat abgeleitet ist, eine Einheit, die von einem Polyol ohne Säuregruppe abgeleitet ist, und eine Einheit, die von einem Polyol mit einer Säuregruppe abgeleitet ist, aufweist.

**9.** Wässrige Tinte nach Anspruch 8, wobei in dem Urethanharz ein Anteil einer Einheit, die von dem Polyol mit einer Säuregruppe abgeleitet ist und an einem molekularen Ende vorhanden ist, relativ zu der gesamten Einheit, die von dem Polyol mit einer Säuregruppe abgeleitet ist, 30 Mol-% oder weniger beträgt.

**10.** Wässrige Tinte nach einem der Ansprüche 1 bis 9, wobei ein gewichtsgemitteltes Molekulargewicht der durch die allgemeine Formel (1) dargestellten Verbindung 800 oder mehr bis 2.000 oder weniger beträgt.

**11.** Wässrige Tinte nach einem der Ansprüche 1 bis 10, wobei das zweite oberflächenaktive Mittel eine Verbindung umfasst, die durch die folgende allgemeine Formel (2) dargestellt ist,

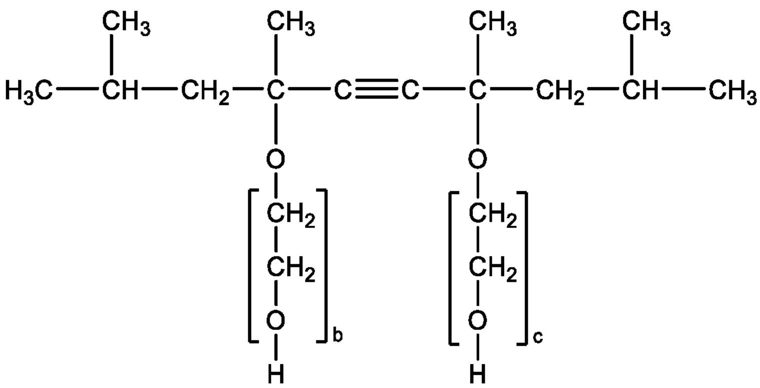 (2)

in der allgemeinen Formel (2) stellen "b" und "c" jeweils unabhängig voneinander eine positive ganze Zahl dar.

**12.** Wässrige Tinte nach Anspruch 11, wobei "b" und "c" in der allgemeinen Formel (2) jeweils unabhängig voneinander eine ganze Zahl von 1 oder mehr bis 50 oder weniger darstellen.

**13.** Wässrige Tinte nach einem der Ansprüche 1 bis 12, wobei ein Gehalt (Massen-%) der Partikelkomponente in der wässrigen Tinte 0,10 Massen-% oder mehr bis 10,00 Massen-% oder weniger, bezogen auf die Gesamtmasse der Tinte, beträgt.

**14.** Wässrige Tinte nach einem der Ansprüche 1 bis 13, wobei ein Gehalt (Massen-%) des ersten oberflächenaktiven Mittels in der wässrigen Tinte 0,05 Massen-% oder mehr bis 4,00 Massen-% oder weniger, bezogen auf die Gesamtmasse der Tinte, beträgt.

**15.** Wässrige Tinte nach einem der Ansprüche 1 bis 14, wobei ein Gehalt (Massen-%) des zweiten oberflächenaktiven Mittels in der wässrigen Tinte 0,10 Massen-% oder mehr bis 3,00 Massen-% oder weniger, bezogen auf die Gesamtmasse der Tinte, beträgt.

**16.** Wässrige Tinte nach einem der Ansprüche 1 bis 15, wobei in der wässrigen Tinte ein Massenverhältnis eines Gehalts (Massen-%) der Partikelkomponente zu einem Gesamtgehalt (Massen-%) des ersten oberflächenaktiven Mittels und des zweiten oberflächenaktiven Mittels das 0,01-fache oder mehr bis 10,00-fache oder weniger beträgt.

**17.** Tintenpatrone, umfassend:

eine Tinte; und
einen Tintenspeicherabschnitt, der konfiguriert ist, die Tinte zu speichern,
wobei die Tinte die wässrige Tinte nach einem der Ansprüche 1 bis 16 umfasst.

**18.** Tintenstrahlaufzeichnungsverfahren, umfassend das Ausstoßen einer Tinte aus einem Aufzeichnungskopf eines Tintenstrahlsystems durch Einwirkung von Wärmeenergie, um ein Bild auf einem Aufzeichnungsmedium aufzuzeichnen, wobei die Tinte die wässrige Tinte nach einem der Ansprüche 1 bis 16 umfasst.

**19.** Tintenstrahlaufzeichnungsverfahren nach Anspruch 18, wobei das Aufzeichnungsmedium eine Tintendurchlässigkeit aufweist.

## Revendications

**1.** Encre aqueuse destinée à être éjectée d'une tête d'enregistrement d'un système à jet d'encre par une action d'énergie thermique, l'encre aqueuse comprenant :

un composant particulaire ;
un premier tensioactif ; et
un second tensioactif,
dans laquelle le composant particulaire comprend au moins une sorte choisie dans le groupe consistant en : un pigment et une particule de résine,
dans laquelle le premier tensioactif comprend un composé représenté par une formule générale (1) suivante, et dans laquelle le second tensioactif comprend un composé acétylène glycol :

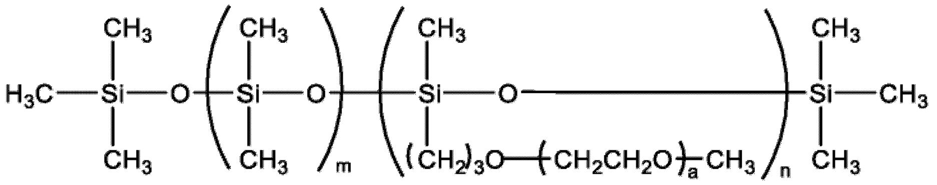

(1)

dans la formule générale (1), « m » et « n » représentent chacun indépendamment un nombre entier de 1 ou plus et satisfont la relation m+n ≤10, et « a » représente un nombre entier de 10 ou plus à 20 ou moins.

**2.** Encre aqueuse selon la revendication 1, dans laquelle, dans l'encre aqueuse, un rapport massique entre une teneur (% en masse) du premier tensioactif et une teneur (% en masse) du second tensioactif est de 0,05 fois ou plus à 3,00 fois ou moins.

**3.** Encre aqueuse selon la revendication 1, dans laquelle, dans l'encre aqueuse, un rapport massique entre une teneur (% en masse) du premier tensioactif et une teneur (% en masse) du second tensioactif est de 0,05 fois ou plus à 2,00 fois ou moins.

**4.** Encre aqueuse selon l'une quelconque des revendications 1 à 3,

dans laquelle l'encre aqueuse comprend en outre :

un premier solvant organique soluble dans l'eau ayant une constante diélectrique relative de 28,0 ou moins ; et un second solvant organique soluble dans l'eau ayant une constante diélectrique relative de 40,0 ou plus, et dans laquelle le premier solvant organique soluble dans l'eau est un alcanediol ayant des groupes hydroxy aux deux terminaisons de sa chaîne hydrocarbonée.

**5.** Encre aqueuse selon l'une quelconque des revendications 1 à 4,

dans laquelle l'encre aqueuse comprend en outre un composé représenté par une formule générale (3) suivante, et
dans laquelle, dans l'encre aqueuse, un rapport massique entre une teneur (% en masse) du composé représenté par la formule générale (3) et une teneur (% en masse) du premier tensioactif est de 0,01 fois ou moins :

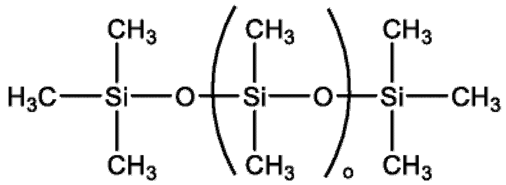

(3)

dans la formule générale (3), « ◦ » représente un nombre entier de 1 ou plus à 10 ou moins.

**6.** Encre aqueuse selon l'une quelconque des revendications 1 à 5, dans laquelle le composant particulaire comprend le pigment.

**7.** Encre aqueuse selon l'une quelconque des revendications 1 à 6, dans laquelle le composant particulaire comprend la particule de résine, et
dans laquelle la particule de résine comporte un cœur formé uniquement d'un motif n'ayant pas de groupe acide et une écorce formée de manière à inclure un motif ayant un groupe acide, et au moins l'un du motif pour former le cœur et du motif pour former l'écorce comporte un motif dérivé d'un ester d'acide (méth)acrylique.

**8.** Encre aqueuse selon l'une quelconque des revendications 1 à 7,

dans laquelle l'encre aqueuse comprend en outre une résine uréthane, et
dans laquelle la résine uréthane a un motif dérivé d'un polyisocyanate, un motif dérivé d'un polyol n'ayant pas de groupe acide et un motif dérivé d'un polyol ayant un groupe acide.

**9.** Encre aqueuse selon la revendication 8, dans laquelle, dans la résine uréthane, une proportion d'un motif dérivé du polyol ayant un groupe acide présent à une terminaison moléculaire par rapport au motif entier dérivé du polyol ayant un groupe acide est de 30 % en mole ou moins.

**10.** Encre aqueuse selon l'une quelconque des revendications 1 à 9, dans laquelle un poids moléculaire moyen en poids du composé représenté par la formule générale (1) est de 800 ou plus à 2 000 ou moins.

**11.** Encre aqueuse selon l'une quelconque des revendications 1 à 10, dans laquelle le second tensioactif comprend un composé représenté par une formule générale (2) suivante,

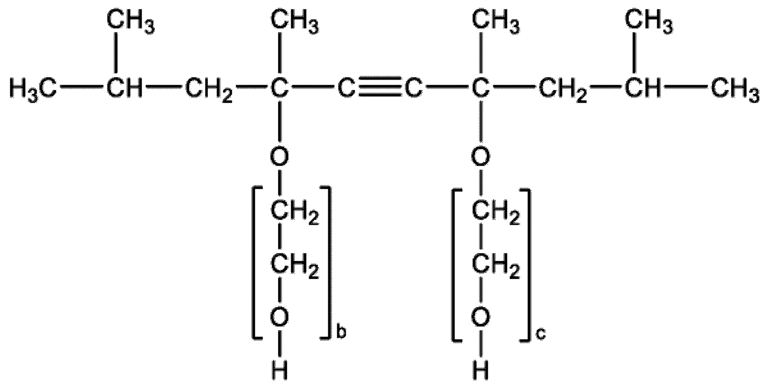

(2)

dans la formule générale (2), « b » et « c » représentent chacun indépendamment un nombre entier positif.

**12.** Encre aqueuse selon la revendication 11, dans laquelle « b » et « c » dans la formule générale (2) représentent chacun indépendamment un nombre entier de 1 ou plus à 50 ou moins.

**13.** Encre aqueuse selon l'une quelconque des revendications 1 à 12, dans laquelle une teneur (% en masse) du composant particulaire dans l'encre aqueuse est de 0,10 % en masse ou plus à 10,00 % en masse ou moins par rapport à la masse totale de l'encre.

**14.** Encre aqueuse selon l'une quelconque des revendications 1 à 13, dans laquelle une teneur (% en masse) du premier tensioactif dans l'encre aqueuse est de 0,05 % en masse ou plus à 4,00 % en masse ou moins par rapport à la masse totale de l'encre.

**15.** Encre aqueuse selon l'une quelconque des revendications 1 à 14, dans laquelle une teneur (% en masse) du second tensioactif dans l'encre aqueuse est de 0,10 % en masse ou plus à 3,00 % en masse ou moins par rapport à la masse totale de l'encre.

**16.** Encre aqueuse selon l'une quelconque des revendications 1 à 15, dans laquelle, dans l'encre aqueuse, un rapport massique entre une teneur (% en masse) du composant particulaire et une teneur totale (% en masse) du premier tensioactif et du second tensioactif est de 0,01 fois ou plus à 10,00 fois ou moins.

**17.** Cartouche d'encre comprenant :

une encre ; et
une portion de stockage d'encre configurée pour stocker l'encre,
dans laquelle l'encre comprend l'encre aqueuse selon l'une quelconque des revendications 1 à 16.

**18.** Procédé d'enregistrement par jet d'encre comprenant l'éjection d'une encre depuis une tête d'enregistrement d'un système à jet d'encre par une action d'énergie thermique pour enregistrer une image sur un support d'enregistrement, dans lequel l'encre comprend l'encre aqueuse selon l'une quelconque des revendications 1 à 16.

**19.** Procédé d'enregistrement par jet d'encre selon la revendication 18, dans lequel le support d'enregistrement présente une perméabilité à l'encre.

FIG. 1

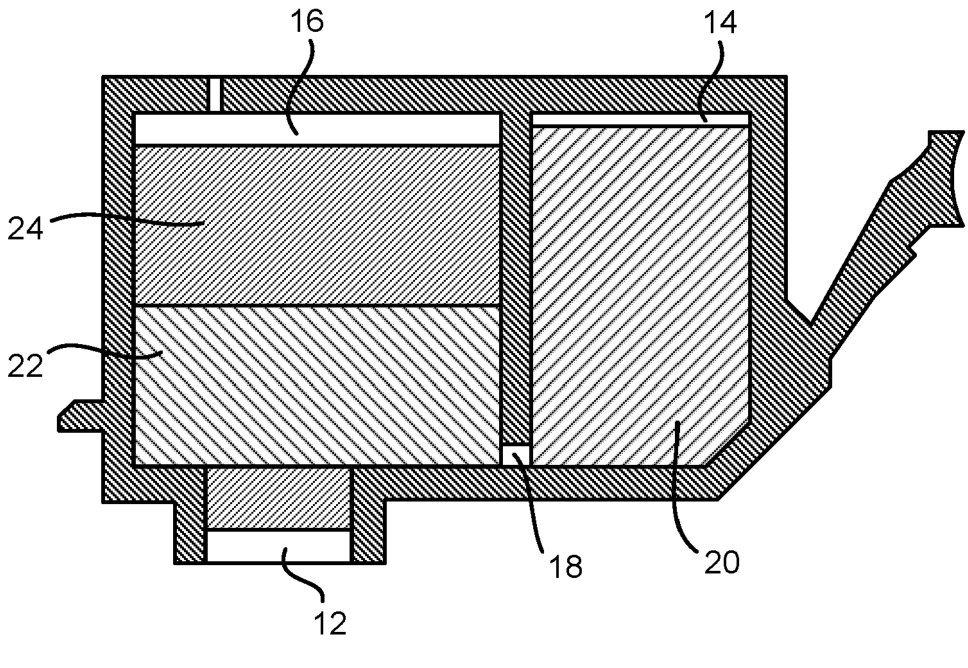

FIG. 2A

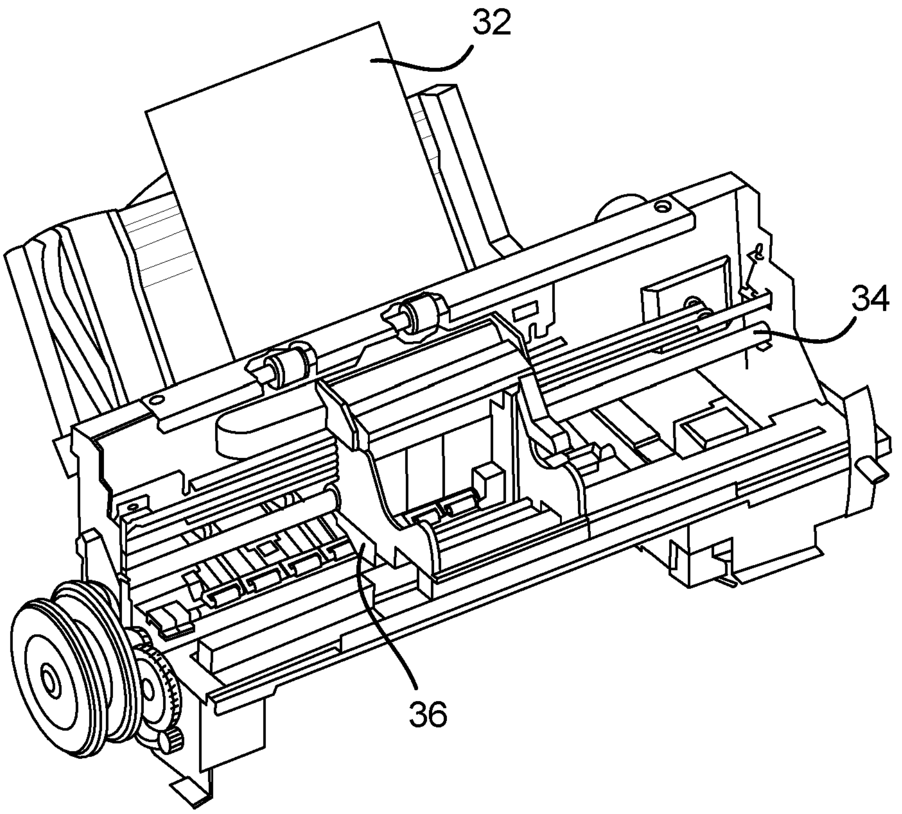

FIG. 2B

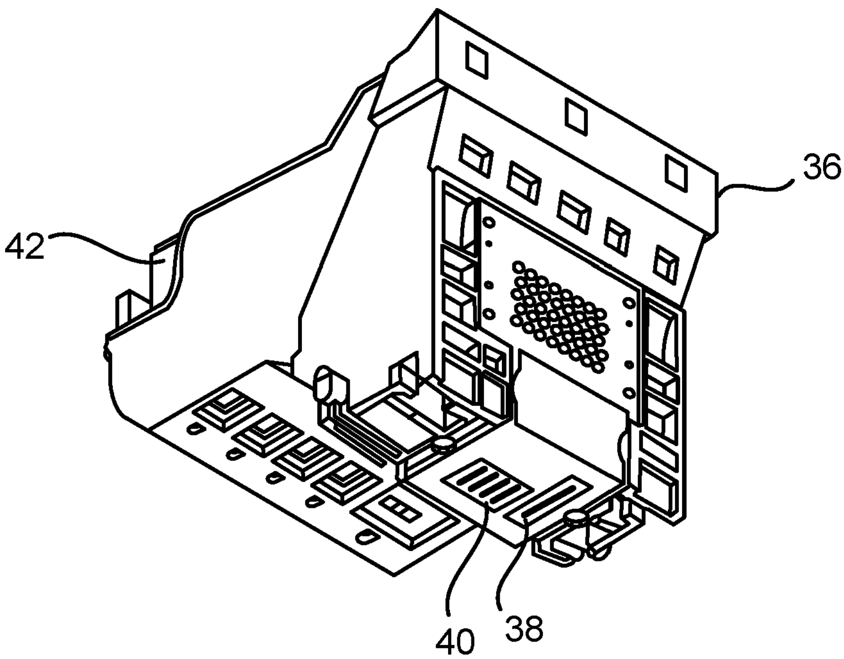

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004115649 A
- JP 2006233083 A
- JP 2005103457 A
- JP 2017019990 A